(19) Europäisches Patentamt
European Patent Office
Office européen des brevets

(11) **EP 3 598 667 B1**

(12) # EUROPEAN PATENT SPECIFICATION

(45) Date of publication and mention
of the grant of the patent:
**14.05.2025 Bulletin 2025/20**

(21) Application number: **18766962.7**

(22) Date of filing: **07.03.2018**

(51) International Patent Classification (IPC):
**H04B 10/293** (2013.01)    **H04B 10/272** (2013.01)
**H04B 10/077** (2013.01)

(52) Cooperative Patent Classification (CPC):
**H04B 10/0773; H04B 10/272; H04B 10/293**

(86) International application number:
**PCT/CN2018/078245**

(87) International publication number:
**WO 2018/166381 (20.09.2018 Gazette 2018/38)**

(54) **OPTICAL SIGNAL POWER CONTROL METHOD AND DEVICE, AND OPTICAL LINE TERMINAL**

VERFAHREN UND VORRICHTUNG ZUR STEUERUNG DER LEISTUNG EINES OPTISCHEN
SIGNALS UND OPTISCHES LEITUNGSENDGERÄT

DISPOSITIF ET PROCÉDÉ DE COMMANDE DE PUISSANCE DE SIGNAL OPTIQUE, ET TERMINAL
DE LIGNE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2017 CN 201710147524**

(43) Date of publication of application:
**22.01.2020 Bulletin 2020/04**

(73) Proprietor: **ZTE Corporation**
**Shenzhen, Guangdong 518057 (CN)**

(72) Inventors:
• **YANG, Wei**
**Shenzhen**
**Guangdong 518057 (CN)**

• **HUANG, Xingang**
**Shenzhen**
**Guangdong 518057 (CN)**

(74) Representative: **Ipsilon**
**Le Centralis**
**63, avenue du Général Leclerc**
**92340 Bourg-la-Reine (FR)**

(56) References cited:
**CN-A- 101 350 670      CN-A- 101 944 949
CN-A- 102 035 596      CN-A- 104 901 744
US-A1- 2009 208 227    US-A1- 2012 163 809
US-A1- 2015 249 314**

Description

FIELD OF THE INVENTION

The present disclosure relates to the field of communication, and particularly, to an optical signal power control method and device, and an optical line terminal.

BACKGROUND

With increasing demands on bandwidth of users, passive optical network (PON) technology in the access field is also constantly updated. From EPON (Ethernet Passive Optical Network), GPON (Gight-Capable Passive Optical Network) to 10GEPON, XGPON, and to NGPON2, as well as the 100GEPON under research and development, bandwidth in the access technology is constantly increased. However, the increase in bandwidth brings about a problem of insufficient power budget, because too many users on the access network requires a high power budget to make receiving of light powers at both a central office and a terminal meet sensitivity requirements and achieve good transmission performance. In order to meet the power budget requirements, an optical amplifier is required. Optical amplifiers commonly used in current communication systems are Erbium-doped Optical Fiber Amplifiers (EDFAs) and Semiconductor Optical Amplifiers (SOAs). Due to advantages including a relatively flat and wide gain spectrum, fast dynamic response, and integratability, SOA has attracted more and more attention and become a good choice for optical amplifier components in the optical access field.

However, a dynamic range problem is present in the PON system. Due to different light transmitting powers of different optical network units (ONUs), and different distances from different ONUs to an optical line terminal (OLT), the OLT receives different light powers of different ONUs. If the SOA maintains the same gain, it may cause insufficiently amplified receiving light of some ONUs that fails to meet the OLT sensitivity requirements, while causing excessively amplified receiving light of some other ONUs that leads to overload of the OLT and even damages to an OLT receiver. Therefore, a mechanism to control an output light power of the SOA is required so that the SOA can reasonably adjust the gain according to different incident light powers, or to add a variable attenuation after the SOA to make the emitting light have a relatively uniform power.

US 2009/208227 A1 discloses a passive optical network system, wherein the receiver of the OLT has a data table related to a time slot information and required gain information and to register the required gain, a new ONU has to send a registration request; If no registration request is transmitted during a cycle, the OLT increases the gain of the SOAs, if a registration request is received the gain is adjusted one step lower. CN 101 350 670 A discloses the generation of control information comprising time slots and a list of amplification gain values according to the distance from each ONU to the OLT

In view of the related art, no effective solution has been proposed yet regarding the problem of equalizing uplink burst signal amplification in an optical network unit (ONU).

SUMMARY

In order to solve at least the problem of equalizing uplink burst signal amplification in an ONU, an optical signal power control method and device, and an optical line terminal are provided in the embodiments of the present disclosure.

The invention is as defined in claims 1-15.

In the present application, acquiring different time points when uplink optical signals of optical network units (ONUs) arrive at an optical signal amplifier or a variable optical attenuator; establishing a correspondence relationship between an ONU ID and a power control factor of the uplink optical signals; and performing power control on the uplink optical signals according to the different time points and the correspondence relationship, the uplink burst signals of the ONU are amplified to a range receivable by the OLT receiver, thereby solving the problem of equalizing uplink burst signal amplification in an optical network unit (ONU) in the related art, and achieving the technical effect of reducing requirements on the receiving power range of the OLT receiver.

BRIEF DESCRIPTION OF THE DRAWINGS

The drawings described herein are intended to provide a further understanding of the present disclosure, and are intended to be a part of the present disclosure. The exemplary embodiments of the present disclosure and the description thereof are for explaining the present disclosure and do not constitute an undue limitation of the present disclosure. In the drawings:

Fig. 1 is a flowchart of an optical signal power control method according to an embodiment of the present disclosure;
Fig. 2 is a schematic diagram (I) of an optical signal power control structure according to an embodiment of the present disclosure;
Fig. 3 is a system block diagram during ONU registration according to an embodiment of the present disclosure;
Fig. 4 is a flowchart (I) of ONU registration according to an embodiment of the present disclosure;
Fig. 5 is a flowchart (II) of ONU registration according to an embodiment of the present disclosure;
Fig. 6 is a schematic diagram (II) of an optical signal power control structure according to an embodiment of the present disclosure;
Fig. 7 is a schematic diagram (III) of an optical signal power control structure according to an embodiment of the present disclosure;
Fig. 8 is a flowchart (III) of ONU registration according to an embodiment of the present disclosure;
Fig. 9 is a flowchart (IV) of ONU registration according to an embodiment of the present disclosure;
Fig. 10 is a flowchart (V) of ONU registration according to an embodiment of the present disclosure;
Fig. 11 is a flowchart (VI) of ONU registration according to an embodiment of the present disclosure;
Fig. 12 is a schematic diagram of a multi-channel optical signal power control structure according to an embodiment of the present disclosure;
Fig. 13 is a schematic diagram (I) of a multi-channel optical signal power control structure according to an embodiment of the present disclosure;
Fig. 14 is a schematic diagram (II) of a multi-channel optical signal power control structure according to an embodiment of the present disclosure;
Fig. 15 is a schematic diagram (III) of a multi-channel optical signal power control structure according to an embodiment of the present disclosure;
Fig. 16 is a schematic diagram (IV) of a multi-channel optical signal power control structure according to an embodiment of the present disclosure;
Fig. 17 is a schematic diagram (V) of a multi-channel optical signal power control structure according to an embodiment of the present disclosure;
Fig. 18 is a structural block diagram of an optical signal power control device according to an embodiment of the present disclosure;
Fig. 19 is a structural block diagram (I) of an optical signal power control device according to an embodiment of the present disclosure;
Fig. 20 is a structural block diagram (II) of an optical signal power control device according to an embodiment of the present disclosure;
Fig. 21 is a structural block diagram (III) of an optical signal power control device according to an embodiment of the present disclosure;
Fig. 22 is a structural block diagram (IV) of an optical signal power control device according to an embodiment of the present disclosure;
Fig. 23 is a structural block diagram (V) of an optical signal power control device according to an embodiment of the present disclosure; and
Fig. 24 is a structural block diagram (VI) of an optical signal power control device according to an embodiment of the present disclosure.

## DETAILED DESCRIPTION OF THE EMBODIMENTS

The disclosure will be described in detail below with reference to the drawings in conjunction with the embodiments. It should be noted that the embodiments of the disclosure and features therein may be combined with each other in any manner as long as they are not contradictory.
It should be also noted that terms "first", "second", and the like in the description, claims and drawings of the disclosure are used for the purpose of distinguishing similar objects instead of indicating a specific order or sequence.

Embodiment 1

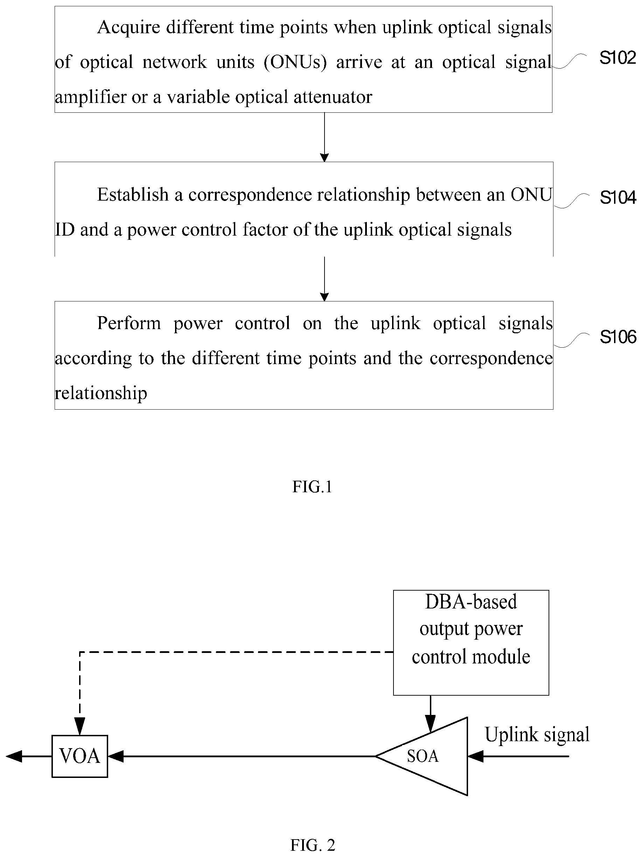

In this embodiment, an optical signal power control method is provided. Fig. 1 is a flowchart of an optical signal power control method according to an embodiment of the present disclosure. As shown in Fig. 1, the flow includes the following steps S102 to S106:

At step S102, different time points when uplink optical signals of optical network units (ONUs) arrive at an optical signal amplifier or a variable optical attenuator are acquired.
At step S104, a correspondence relationship between an ONU ID and a power control factor of the uplink optical signals is established.
At step S106, power control is performed on the uplink optical signals according to the different time points and the correspondence relationship.

In this embodiment, the application scenarios of the foregoing optical signal amplification method include: a Passive Optical Network (PON). In this application scenario, acquiring different time points when uplink optical signals of optical network units (ONUs) arrive at an optical signal amplifier or a variable optical attenuator; establishing a correspondence relationship between an ONU ID and a power control factor of the uplink optical signals; and performing power control on the uplink optical signals according to the different time points and the correspondence relationship, the uplink burst signals of the ONU are amplified to a range receivable by the OLT receiver, thereby solving the problem of equalizing uplink burst signal amplification in an optical network unit (ONU) in the related art, and achieving the technical effect of reducing requirements on the receiving power range of the OLT receiver.

It should be noted that, in this embodiment, the number of optical signal amplifiers includes but is not limited to: one or more than one; and the number of variable optical attenuators includes but is not limited to: one or more than one.

Optionally, in the embodiment, the optical signal amplifier is mainly described taking a semiconductor amplifier (SOA) as an example.

The present embodiment will be exemplified below with reference to specific examples.

As shown in Fig. 2, a time point when each ONU uplink signal arrives at the SOA may be acquired by DBA (Dynamic Bandwidth Allocation). At that time point, an SOA gain, or an attenuation of a variable optical attenuator (VOA) behind the SOA, or both the SOA gain and the VOA attenuation, are adjusted by a DBA-based output power control module, thereby amplifying the ONU uplink burst signals to a range receivable by the OLT receiver to obtain an amplified effect and reducing requirements on the receiving power range of the OLT receiver.

Optionally, the above power control factor includes, but is not limited to, a gain of the optical signal amplifier, and an attenuation of the variable optical attenuator.

In an optional implementation of the present disclosure, when the power control factor is a gain of the optical signal amplifier, the step of establishing the correspondence relationship between the ONU ID and the power control factor of the uplink optical signals includes the following steps S11 to S12:

At step S11, a registration time slot is allocated and a downlink registration signal is transmitted.

At step S12, when the ONU receives the downlink registration signal and determines that a power requirement of the registration time slot is met, registration and establishment of a correspondence relationship between the ONU ID and the gain of the optical signal amplifier are started.

Through the above steps S11 to S12, the uplink burst signals of the ONU are further amplified to a range receivable by the OLT receiver, thereby solving the problem of equalizing uplink burst signal amplification in an optical network unit (ONU) in the related art, and achieving the technical effect of reducing requirements on the receiving power range of the OLT receiver.

Optionally, when the power control factor is a gain of the optical signal amplifier, the step of establishing the correspondence relationship between the ONU ID and the power control factor of the uplink optical signals includes the following steps S13 to S15:

At step S13, a registration time slot is allocated and a downlink registration signal is transmitted, wherein the downlink registration signal includes gain information of the optical signal amplifier.
At step S14, when the ONU receives the downlink registration signal and determines that the downlink registration signal is in a registration time slot with a minimum gain of the optical signal amplifier, the gain of the optical signal amplifier is increased until a serial number transmitted by the ONU is correctly received.
At step S15, a correspondence relationship between the ONU ID and the gain of the optical signal amplifier is established.

In an optional implementation of the present disclosure, when the power control factor is attenuation of the variable optical attenuator, the step of establishing the correspondence relationship between the ONU ID and the power control factor of the uplink optical signals includes the following steps S21 to S22:

At step S21, a registration time slot is allocated and a downlink registration signal is transmitted, wherein the registration time slot is pre-assigned an attenuation value.

At step S22, when the ONU receives the downlink registration signal and determines that a power requirement of the registration time slot is met, registration and establishment of a correspondence relationship between the ONU ID and the attenuation of the variable optical attenuator are started.

Through the above steps S21 to S22, the uplink burst signals of the ONU are further amplified to a range receivable by the OLT receiver, thereby solving the problem of equalizing uplink burst signal amplification in an optical network unit (ONU) in the related art, and achieving the technical effect of reducing requirements on the receiving power range of the OLT receiver.

Optionally, when the power control factor is an attenuation of the variable optical attenuator, the step of establishing the correspondence relationship between the ONU ID and the power control factor of the uplink optical signals includes the following steps S23 to S26:

At step S23, the attenuation of the variable optical attenuator is set to maximum.

At step S24, a registration time slot is allocated and a downlink registration signal is transmitted, wherein the downlink registration signal includes attenuation information of the variable optical attenuator.

At step S25, when the ONU receives the downlink registration signal and determines that the downlink registration signal is in a registration time slot with a minimum actual gain of the optical signal amplifier, the attenuation of the variable optical attenuator is decreased until a serial number transmitted by the ONU is correctly received.

At step S26, a relationship between the ONU ID and the attenuation of the variable optical attenuator is established.

In an optional implementation of the present disclosure, when the power control factor is a gain of the optical signal amplifier and an attenuation of the variable optical attenuator, the step of establishing the correspondence relationship between the ONU ID and the power control factor of the uplink optical signals includes the following steps S31 to S32:

At step S31, a registration time slot is allocated and a downlink registration signal is transmitted, wherein in the registration time slot, the optical signal amplifier is provided with a pre-assigned gain, and the variable optical attenuator is provided with a pre-assigned attenuation.

At step S32, when the ONU receives the downlink registration signal and determines that a power requirement of the registration time slot is met, registration and establishment of a correspondence relationship between the ONU ID, the gain of the optical signal amplifier, and the attenuation of the variable optical attenuator are started.

Through the above steps S31 to S32, the uplink burst signals of the ONU are further amplified to a range receivable by the OLT receiver, thereby solving the problem of equalizing uplink burst signal amplification in an optical network unit (ONU) in the related art, and achieving the technical effect of reducing requirements on the receiving power range of the OLT receiver.

Optionally, when the power control factor is a gain of the optical signal amplifier and an attenuation of the variable optical attenuator, the step of establishing the correspondence relationship between the ONU ID and the power control factor of the uplink optical signals includes the following steps S33 to S36:

At step S33, an actual gain of the optical signal amplifier is set to minimum.

At step S34, a registration time slot is allocated and a downlink registration signal is transmitted, wherein the downlink registration signal includes actual gain information of the optical signal amplifier.

At step S35, when the ONU receives the downlink registration signal and determines that the downlink registration signal is in a registration time slot with a minimum actual gain of the optical signal amplifier, the gain of the optical signal amplifier is increased until a serial number transmitted by the ONU is correctly received.

At step S36, a correspondence relationship between the ONU ID, the gain of the optical signal amplifier, and the attenuation of the variable optical attenuator is established.

In an optional implementation of the present disclosure, a plurality of optical signal amplifiers or variable optical attenuators are provided. When a plurality of optical signal amplifiers or variable optical attenuators are provided, a plurality of correspondence relationships are provided, wherein each of the plurality of correspondence relationships is a relationship between each channel of ONU IDs and a power control factor of the corresponding uplink optical signals.

Optionally, before reaching the plurality of optical signal amplifiers and/or variable optical attenuators, the uplink optical signals are subjected to corresponding power control via a shared optical signal amplifier.

The present embodiment will be exemplified below with reference to specific examples.

Embodiment I

This embodiment is divided into two steps. In a first step, a relationship between the ONU ID and the SOA gain is established in a registration stage. In a second step, a dynamic gain adjustment table is established with reference to DBA and according to the obtained relationship, wherein a DBA-based output power control module dynamically adjusts the SOA gain according to the table so that powers of the optical signals emitted by each of the ONUs are amplified, and the amplified powers tend to be the same.

In the first step, a correspondence relationship between the ONU ID and the SOA gain is established.

Since power values of the uplink optical signals of each ONU that reach the SOA are unknown at the beginning, the suitable SOA gain for each ONU uplink optical signal cannot be determined. In PON standards, a dynamic range of the ODN may be up to 15 dB, and a fluctuation range of the light transmitting power of the ONU may be up to 5 dB. As a result, a difference in the light powers reaching the OLT receiver may be up to 20 dB. If the SOA gain is set too small, some ONUs with greater signal attenuations to the OLT cannot be registered. However, if the SOA gain is set too large, some ONUs with smaller signal attenuations to the OLT may have excessively amplified light powers, thereby damaging the OLT optical receiver. Therefore, a suitable method is needed to enable the OLT to correctly receive uplink burst information from the ONU with an appropriate gain, record the ONU ID and the SOA gain value at that time, and establish a relationship between the two. Two ONU registration methods are provided below.

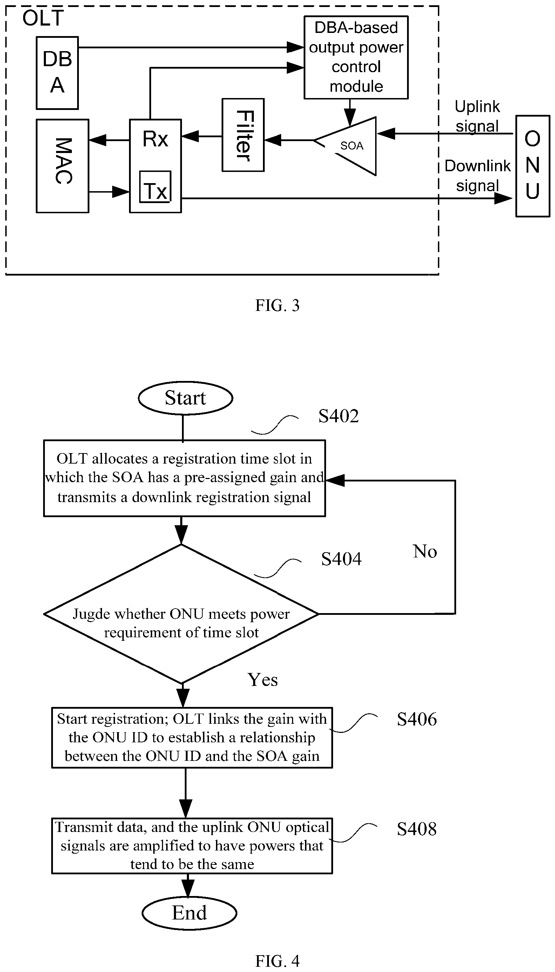

Fig. 3 is a system block diagram during ONU registration. As shown in Fig. 3, the OLT includes a medium access layer (MAC), a DBA module, a light emitting module (Tx), a light receiving module (Rx) capable of measuring a light power, a filter for filtering noises of SOA amplified spontaneous emission (ASE), an SOA, and a DBA-based output power control module. The DBA-based output power control module may consist of a memory, a controller and a driver. The memory is used for storing a dynamic gain adjustment table, according to the dynamic gain adjustment table, the controller controls the driver to drive the SOA and change the SOA gain. The controller may also directly receive a command from the OLT to adjust the SOA gain.

A first ONU registration method: as shown in Fig. 3, the OLT allocates registration time slots in segments. In each time slot, the SOA has a pre-assigned gain that is set according to a power range that may be incident on the SOA and a receiving light power range of the OLT receiver. For example, provided that a system dynamic range is 20 dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned SOA gain values of 10dB and 15dB, respectively. In this way, the ONU corresponding to the incident power on SOA of [-40dBm, -30dBm] may be registered in the time slot with an SOA gain of 15dB, and the ONU corresponding to the incident power on SOA of [- 30dBm, - 20dBm] may be registered in the time slot with an SOA gain of 10dB. In a certain registration time slot, the OLT allocates a gain to the SOA through the DBA-based output power control module and transmits a downlink signal containing the light transmitting power information of the OLT, and notifies an eligible ONU to transmit an uplink signal. The eligible ONU refers to an ONU in which a value obtained by the ONU transmitting power subtracting uplink attenuation, that is, the incident power value on SOA, falls into a power range specified by the time slot. With a known light transmitting power of the OLT, the ONU calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. The uplink signal is amplified by the SOA with the pre-assigned gain and then filtered by the filter to remove ASE noises. The receiver receives the filtered signal, measures the light power of the same, and converts the optical signal into an electrical signal to be transmitted to the MAC. The OLT records the gain value of the SOA and the ONU ID at this time, completes the registration, and establishes a relationship between the ONU ID and the SOA gain. The flowchart is shown in Fig. 4.

The established relationship between the ONU ID and the SOA gain is shown in Table 1.

Table 1

| ONU-ID | Gain [dB] |
|--------|-----------|
| 1 | $G_1$ |
| 2 | $G_2$ |
| 3 | $G_1$ |
| 4 | $G_2$ |
| 5 | $G_2$ |
| ... | ... |
| n | Gn |

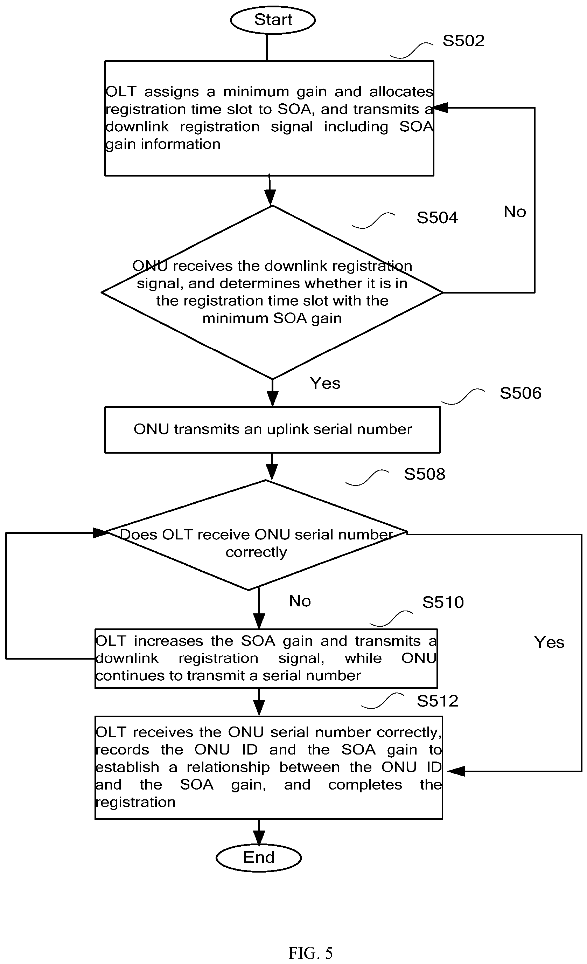

A second registration method: the OLT assigns a minimum gain, for example, 5dB, to the SOA through the DBA-based output power control module, and then allocates the registration time slot and transmits a downlink registration signal including a current SOA gain value. After receiving the registration signal, the ONU determines whether the registration signal is in the registration time slot with the minimum SOA gain, if yes, transmits uplink serial number information; if no, waits for the registration time slot with the minimum SOA gain. The uplink optical signal is amplified by the SOA, and filtered by the ASE filter before being received by the OLT receiver. If the OLT receives correctly, the current ONU ID and SOA gain value are recorded to establish a relationship between the ONU ID and the SOA gain; if the OLT fails to receive correctly, the OLT increases the SOA gain by a fixed value, for example, 5dB, and the above steps are repeated. After the SOA gain is increased to a certain value, the OLT may correctly receive the ONU uplink signals. At this time, the ONU ID and the SOA gain are recorded to establish a relationship between the ONU ID and the SOA gain, and then the registration is completed. The flowchart is shown in Fig. 5.

In a second step, the OLT calculates a time point when each of the ONU optical signal reaches the SOA according to the DBA and the link delay, and establishes a dynamic gain adjustment table based on the relationship between the ONU ID and the SOA gain obtained from the registration process, as shown in Fig. 2, so as to adjust the SOA gain value dynamically by the DBA-based output power control module so that each of the ONUs tends to have the same burst optical signal power.

Table 2

| ONU-ID | Time point of arriving at OLT | Burst duration | Gain (dB) |
|---|---|---|---|
| 1 | $t_1$ | a | $G_1$ |
| 2 | $t_2$ | b | $G_2$ |
| 3 | $t_3$ | c | $G_1$ |
| 4 | $t_4$ | d | $G_2$ |
| 5 | $t_5$ | e | $G_2$ |
| ... | ... | ... | ... |
| n | tn | n | Gn |

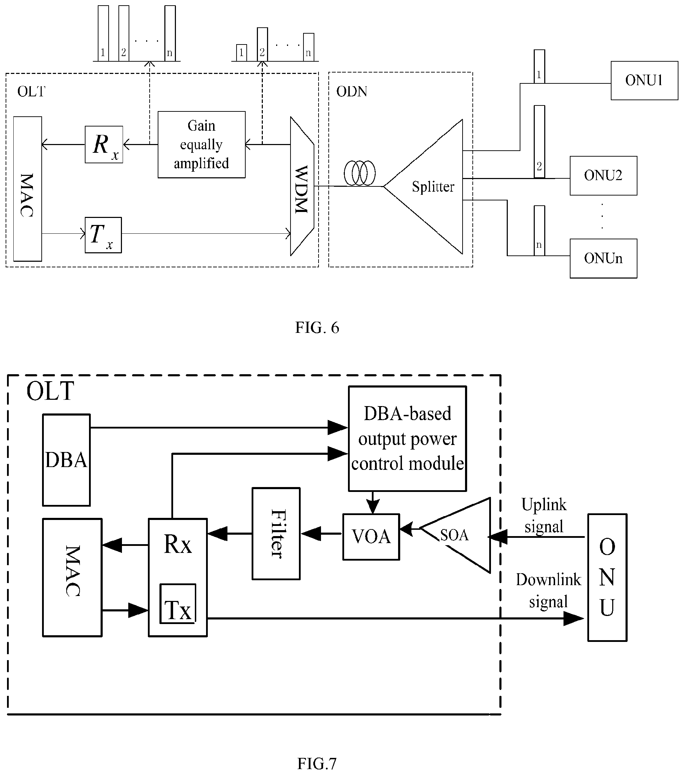

Optionally, during the registration stage, the OLT may fine-tune the SOA gain according to the received ONU light power so that the uplink light power reaches an optimal receiving power of the OLT receiver, for example, -18 dBm, after being amplified by the SOA. Then, the ONU ID and the SOA gain at this time are recorded so that each ONU has a one-to-one SOA gain. In this way, the uplink optical signals of each ONU may be amplified to a consistent optimal receiving power of the OLT receiver. As shown in Fig. 6, the gain equalization amplification module in Fig. 6 can be composed of the components of Fig. 2. The burst optical signals of different ONUs obtain a light power adjusted to the optimal receiving power of the OLT receiver after being amplified by the gain equalization amplification module, thereby increasing the power budget while greatly reducing requirements of the OLT receiver on the dynamic bandwidth range.

Embodiment II

A value of the VOA behind the SOA is dynamically adjusted according to the DBA. Optional Embodiment II is similar to Optional Embodiment I except that the receiving power of the OLT receiver is adjusted by adjusting attenuation.

$$\text{SOA actual gain} = \text{SOA fixed gain} - \text{VOA attenuation (Equation 1)}$$

The DBA-based output power control module may consist of a memory, a controller and a stepping motor for adjusting VOA attenuation.

In a first step, a relationship between the ONU ID and the VOA attenuation is established.

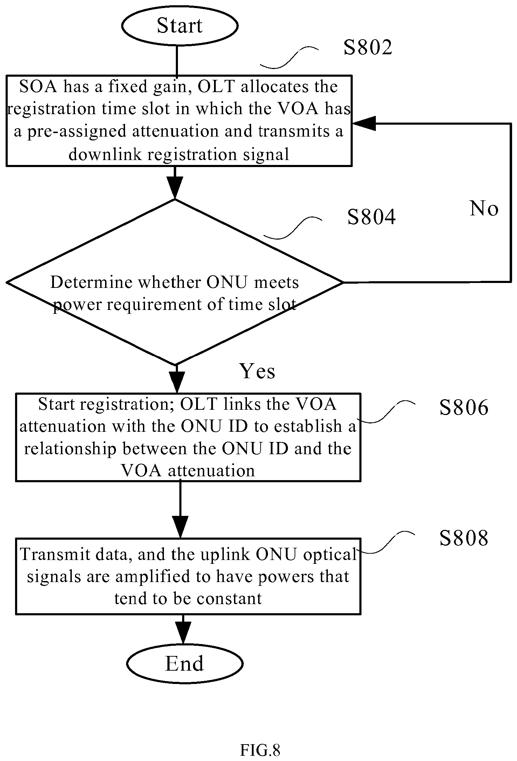

A first ONU registration method: as shown in Fig. 7, the SOA is operated at a fixed gain, and the OLT allocates registration time slots in segments. In each time slot, the VOA has pre-assigned attenuation that is set according to a power range that may be incident on the SOA and a receiving light power range of the OLT receiver. For example, provided that a system dynamic range is 20 dB, the SOA is operated at a fixed gain of 20dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned VOA attenuation values 10dB and 5dB, respectively. In this way, the ONU corresponding to the incident power on SOA of [-40dBm, -30dBm] may be registered in the time slot with a VOA attenuation of 5dB, and the ONU corresponding to the incident power on SOA of [- 30dBm, - 20dBm] may be registered in the time slot with a VOA attenuation of 10dB. In a certain registration time slot, the OLT allocates attenuation to the VOA through the DBA-based output power control module and transmits a downlink signal which notifies an eligible ONU to transmit an uplink signal. The eligible ONU refers to an ONU in which a value obtained by the ONU transmitting power subtracting uplink attenuation, that is, the incident power value on SOA, falls into a power range specified by the time slot. With a known light transmitting power of the OLT, the ONU calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. The uplink signal is amplified by the SOA with the fixed gain, attenuated by the VOA, and then filtered by the filter to remove ASE noises. The receiver receives the filtered signal, measures the light power of the same, and converts the optical signal into an electrical signal to be transmitted to the MAC. The OLT records the attenuation value of the VOA and the ONU ID at this time, completes the registration, and establishes a relationship between the ONU ID and the VOA attenuation. The flowchart is shown in Fig. 8.

The established form of the ONU ID and the VOA attenuation is shown in Table 3.

Table 3

| ONU-ID | VOA attenuation [dB] |
|--------|----------------------|
| 1 | $A_1$ |
| 2 | $A_2$ |
| 3 | $A_1$ |
| 4 | $A_2$ |
| 5 | $A_2$ |
| ... | ... |
| n | An |

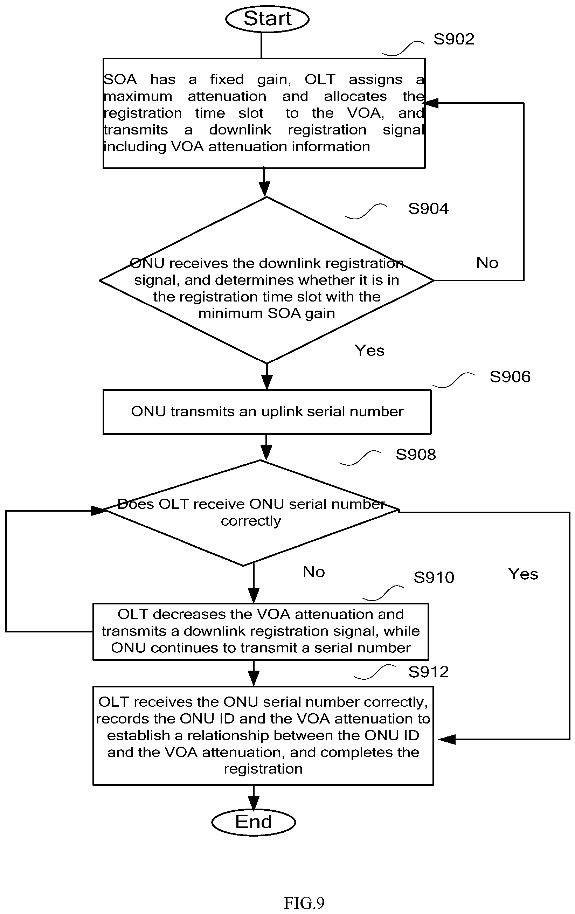

A second registration method: the OLT assigns a maximum attenuation, for example, 10dB, to the VOA through the DBA-based output power control module, then allocates the registration time slot and transmits a downlink registration signal including a current SOA actual gain value (Equation 1). After receiving the registration signal, the ONU determines whether it is in the registration time slot with the minimum SOA actual gain, if yes, transmits uplink serial number information; if no, waits for the registration time slot with the minimum SOA actual gain. The uplink optical signal is amplified by the SOA, attenuated by the VOA, and filtered by the ASE filter before being received by the OLT receiver. If the OLT receives correctly, the current ONU ID and VOA attenuation value are recorded to establish a relationship between the ONU ID and the VOA attenuation; if the OLT fails to receive correctly, the OLT decreases the VOA attenuation by a fixed value, for example, 5dB, and the above steps are repeated. After the VOA attenuation is decreased to a certain value, the OLT may correctly receive the ONU uplink signals. At this time, the ONU ID and the VOA attenuation are recorded to establish a relationship between the ONU ID and the VOA attenuation, and then the registration is completed. The flowchart is shown in Fig. 9.

In a second step, the OLT calculates a time point when each of the ONU optical signal reaches the VOA according to the DBA and the link delay, and establishes a dynamic gain adjustment table based on the relationship between the ONU ID and the VOA attenuation obtained from the registration process, as shown in Fig. 4, so as to adjust the VOA attenuation value dynamically by the DBA-based output power control module so that each of the ONUs tends to have the same burst optical signal power.

Table 4

| ONU-ID | Time point of arriving at OLT | Burst duration | VOA attenuation (dB) |
|--------|-------------------------------|----------------|----------------------|
| 1 | $t_1$ | a | $A_1$ |
| 2 | $t_2$ | b | $A_2$ |
| 3 | $t_3$ | c | $A_1$ |
| 4 | $t_4$ | d | $A_2$ |
| 5 | $t_3$ | e | $A_2$ |
| ... | ... | ... | ... |
| n | tn | n | An |

Optionally, during the registration stage, the OLT may fine-tune the VOA attenuation according to the received ONU light power so that the uplink light power reaches an optimal receiving power of the OLT receiver, for example, -18 dBm, after being amplified by the SOA and attenuated by the VOA. Then, the ONU ID and the VOA attenuation at this time are recorded so that each ONU has a one-to-one VOA attenuation. In this way, the uplink optical signals of each ONU may be amplified to the same optimal receiving power of the OLT.

Embodiment III

Embodiment III is similar to Embodiments I and II except that the receiving power of the OLT receiver is adjusted by adjusting both the SOA gain and the VOA attenuation. This has the advantage of reducing requirements on the adjusting range of the SOA and the VOA.

$$\text{SOA actual gain} = \text{SOA gain} - \text{VOA attenuation (Equation 2)}$$

The DBA-based output power control module may consist of a memory, a controller, a driver for adjusting an SOA gain and a stepping motor for adjusting VOA attenuation.

In a first step, a relationship between the ONU ID, the SOA gain, and the VOA attenuation is established.

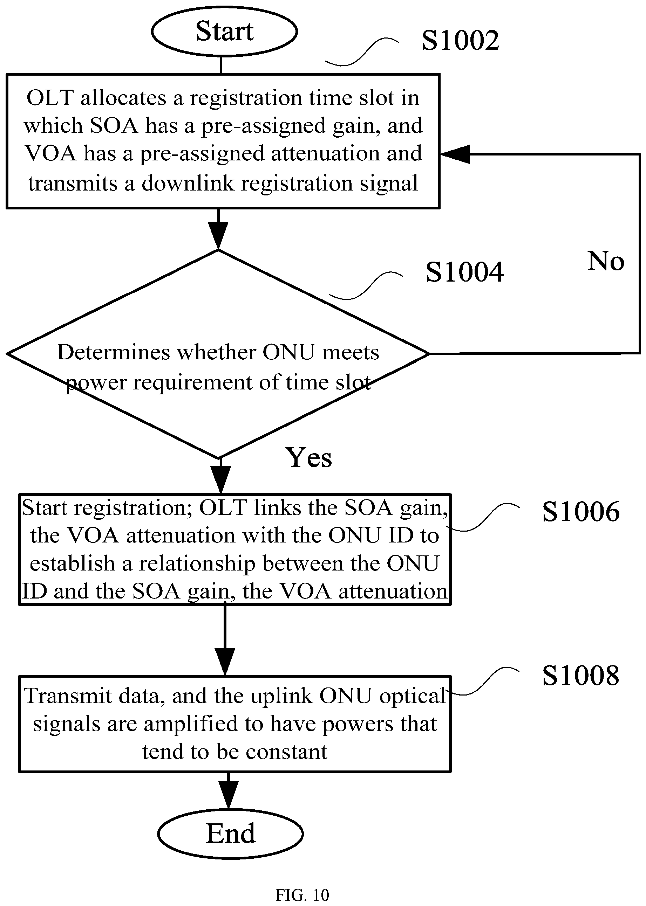

A first ONU registration method: the OLT allocates registration time slots in segments. In each time slot, the SOA is provided with a pre-assigned gain, the VOA is provided with a pre-assigned attenuation, and a difference between the two is called an SOA actual gain. This pre-assigned actual gain is set according to a power range that may be incident on the SOA and a receiving light power range of the OLT receiver. For example, provided that a system dynamic range is 20 dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned SOA actual gain values 10dB and 15dB, respectively. Accordingly, when the actual gain value is 10dB, the SOA gain may be 15dB, and the VOA attenuation may be 5dB; when the actual gain value is 15dB, the SOA gain may be 17dB, and the VOA attenuation may be 2dB. In this way, when the SOA or the VOA alone is desired to be adjusted by a range of 5dB, adjusting both of them may decrease the range to 2dB and 3dB. The ONU corresponding to the incident power on SOA of [-40 dBm, -30 dBm] may be registered in a time slot with an SOA actual gain of 5dB, and the ONU corresponding to the incident power on SOA of [- 30dBm, - 20dBm] may be registered in the time slot with an SOA actual gain of 10dB. In a certain registration time slot, The OLT assigns a gain to the SOA, and attenuation to the VOA through the DBA-based output power control module, and transmits a downlink signal that notifies an eligible ONU to transmit an uplink signal. The eligible ONU refers to an ONU in which a value obtained by the ONU transmitting power subtracting an uplink attenuation, that is, the incident power value on SOA, falls into a power range specified by the time slot. With a known light transmitting power of the OLT, the ONU calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. The uplink signal is amplified by the SOA, attenuated by the VOA, and then filtered by the filter to remove ASE noises. The receiver receives the filtered signal, measures the light power of the same, and converts the optical signal into an electrical signal to be transmitted to the MAC. The OLT records the SOA gain value, the VOA attenuation value, and the ONU ID at this time, completes the registration, and establishes a relationship between the ONU ID, the SOA gain and the VOA attenuation. The flowchart is shown in Fig. 10.

The established form of the ONU ID, the SOA gain, and the VOA attenuation is shown in Table 5.

Table 5

| ONU-ID | SOA gain [dB] | VOA attenuation [dB] | SOA actual gain [dB] |
|--------|---------------|----------------------|----------------------|
| 1 | $G_1$ | $A_1$ | $G_1$-$A_1$ |
| 2 | $G_2$ | $A_2$ | $G_2$-$A_2$ |
| 3 | $G_1$ | $A_1$ | $G_1$-$A_1$ |
| 4 | $G_2$ | $A_2$ | $G_2$-$A_2$ |
| 5 | $G_2$ | $A_2$ | $G_2$-$A_2$ |
| ... | ... | ... | ... |

(continued)

| ONU-ID | SOA gain [dB] | VOA attenuation [dB] | SOA actual gain [dB] |
|--------|---------------|----------------------|----------------------|
| n | Gn | An | Gn-An |

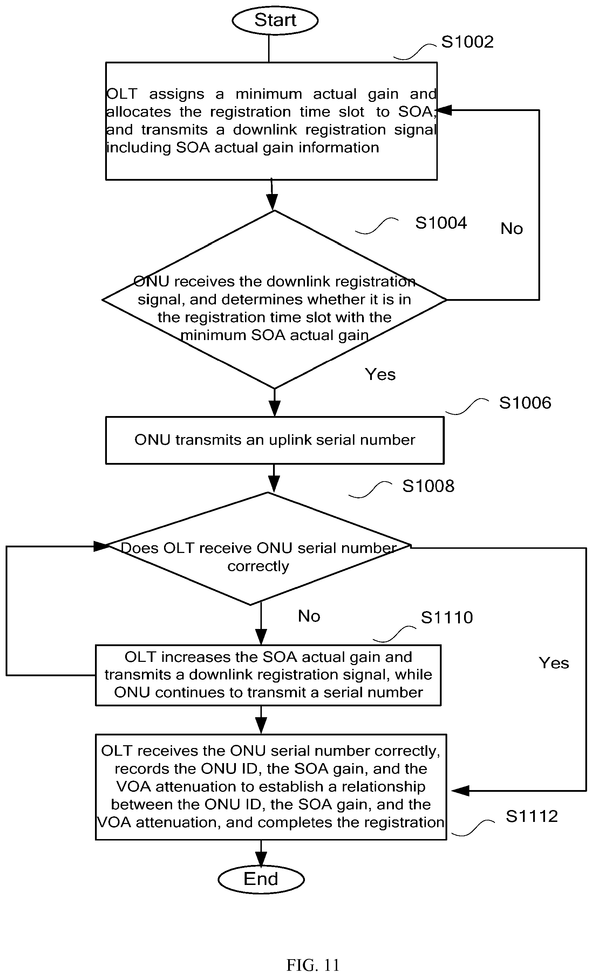

A second registration method: the OLT assigns a minimum actual gain, for example, 5dB, to the SOA through the DBA-based output power control module. This actual gain may be obtained from an SOA gain of 10dB and a VOA attenuation of 5dB. The OLT then allocates the registration time slot and transmits a downlink registration signal including a current SOA actual gain value (Equation 2). After receiving the registration signal, the ONU determines whether it is in the registration time slot with the minimum SOA actual gain, if yes, transmits uplink serial number information; if no, waits for the registration time slot with the minimum SOA actual gain. The uplink optical signal is amplified by the SOA, attenuated by the VOA, and filtered by the ASE filter before being received by the OLT receiver. If the OLT receives correctly, the current ONU ID, SOA gain value, and VOA attenuation value are recorded to establish a relationship between the ONU ID, the SOA gain, and the VOA attenuation; if the OLT fails to receive correctly, the OLT increases the SOA actual gain by a fixed value, for example, 5dB, for example, by increasing the SOA gain to 13dB and decreasing the VOA attenuation to 3dB, and then the above steps are repeated. After the SOA actual gain is increased to a certain value, the OLT may correctly receive the ONU uplink signals. At this time, the ONU ID, the SOA gain, and the VOA attenuation are recorded to establish a relationship between the ONU ID, the SOA gain, and the VOA attenuation, and then the registration is completed. The flowchart is shown in Fig. 11.

In a second step, the OLT calculates a time point when each of the ONU optical signal reaches the SOA according to the DBA and the link delay, and establishes a dynamic gain adjustment table based on the relationship between the ONU ID, the SOA gain, and the VOA attenuation obtained from the registration process, as shown in Fig. 6, so as to adjust the SOA gain value and the VOA attenuation value dynamically by the DBA-based output power control module so that each of the ONUs tends to have the same burst optical signal power.

Table 6

| ONU-ID | Time point of arriving at OLT | Burst duration | SOA gain [dB] | VOA attenuation [dB] |
|--------|-------------------------------|----------------|---------------|----------------------|
| 1 | $t_1$ | a | $G_1$ | $A_1$ |
| 2 | $t_2$ | b | $G_2$ | $A_2$ |
| 3 | $t_3$ | c | $G_1$ | $A_1$ |
| 4 | $t_4$ | d | $G_2$ | $A_2$ |
| 5 | $t_3$ | e | $G_2$ | $A_2$ |
| ... | ... | ... | ... | ... |
| n | tn | n | Gn | An |

Optionally, during the registration stage, the OLT may fine-tune the SOA gain and the VOA attenuation according to the received ONU light power so that the uplink light power reaches an optimal receiving power of the OLT receiver, for example, -18 dBm, after being amplified by the SOA and attenuated by the VOA. Then, the ONU ID, the SOA gain, and the VOA attenuation at this time are recorded so that each ONU has a one-to-one SOA gain and VOA attenuation. In this way, the uplink optical signals of each ONU may be amplified to the same optimal receiving power of the OLT.

Optional Embodiment IV

In this embodiment, a multi-channel amplification architecture and a method for equalizing amplification output powers of each channel based on the architecture, and an OLT for the same are provided. This optional embodiment solves not only the problem of power equalization of each channel, but also the problem of different powers of different channels entering the SOA and an unchangeable SOA gain due to a shared SOA of different channels.

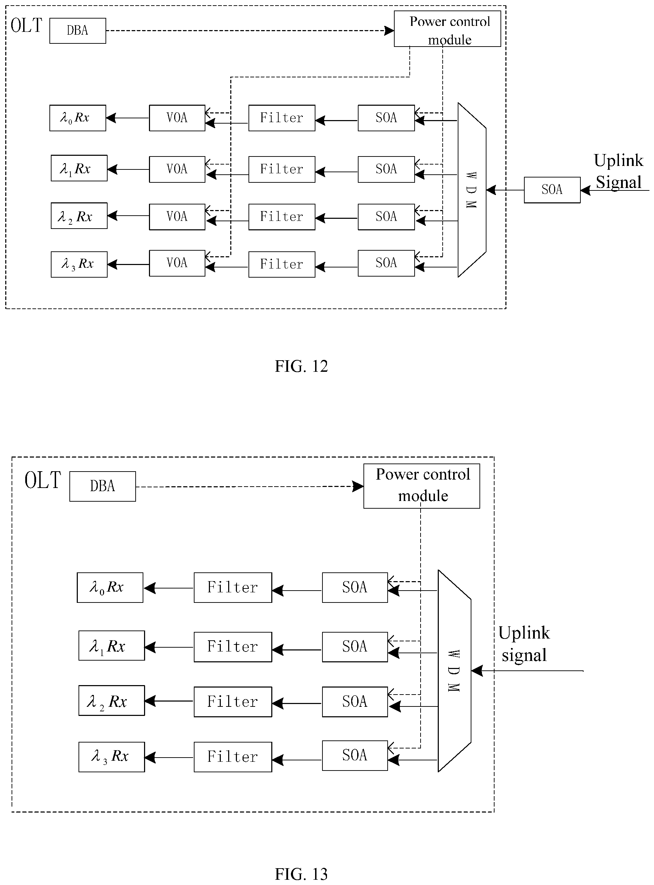

As shown in Fig. 12, an uplink signal line is amplified by an SOA for the first time, and then divided into four signals with different wavelengths through WDM (Wavelength Division Multiplex). Each of the signals is amplified by the SOA again, filtered by a filter to remove ASE noises, attenuated by a variable optical attenuator (VOA), and finally enters the receiver with a proper power. A power control module adjusts the SOA gain or the VOA attenuation, or both, through dynamic bandwidth allocation (DBA) so that different ONU burst packets of each channel of signals, after amplified, enter the receiver with a power in a working range of the receiver. The specific process is divided into two steps:

In a first step, a correspondence relationship between each ONU ID and a corresponding channel of SOA gains (VOA attenuations) is established.

In a second step, after each channel of signals are divided through WDM, the SOA gains (VOA attenuations) are adjusted in real time according to DBA so that light powers incident on the receiver are within the working range of the receiver.

It should be noted that this embodiment may be implemented in a similar manner to the above Optional Embodiments I, II and III, except that this embodiment may include a plurality of SOAs or VOAs, and specifically, the relationship between each channel of ONU IDs and the corresponding channel of SOA gains is established in the registration stage, multiple channels of SOA gains (VOA attenuation) are adjusted.

This optional embodiment will be exemplified below with reference to specific examples.

Example 1

Fig. 13 is a schematic structural diagram of each channel of SOA gains after dynamically adjusting WDM according to DBA. This architecture includes two steps. In a first step, a relationship between each channel of ONU IDs and a corresponding channel of SOA gains is established in the registration stage. In a second step, a dynamic gain adjustment table is established with reference to DBA and according to the obtained relationship, wherein a DBA-based output power control module dynamically adjusts the SOA gains according to the table so that powers of the optical signals emitted by each ONU are amplified, and the amplified light powers tend to fall into the working range of the receiver.

In the first step, a relationship between each channel of ONU IDs and the corresponding channel of SOA gains is established.

Since power values of each channel of ONU uplink optical signals that reach the SOA is unknown at the beginning, a suitable SOA gain for each ONU uplink optical signal cannot be determined. In PON standards, a dynamic range of the ODN may be up to 15 dB, and a fluctuation range of the light transmitting power of the ONU may be up to 5 dB. As a result, a difference in the light powers reaching the OLT receiver may be up to 20 dB. If the SOA gain is set too small, some ONUs with greater signal attenuations to the OLT cannot be registered. However, if the SOA gain is set too large, some ONUs with smaller signal attenuations to the OLT may have excessively amplified light powers, thereby damaging the OLT optical receiver.

Therefore, a suitable method is needed to enable the OLT to correctly receive uplink burst information from the ONU with an appropriate gain, record the ONU ID and the SOA gain value at that time, and establish a relationship between the two. Two ONU registration methods are provided below.

A first ONU registration method: the OLT allocates registration time slots in segments for each channel of signals. In each time slot, the SOA for each channel has a pre-assigned gain that is set according to a power range that may be incident on the SOA and a receiving light power range of the OLT receiver. For example, provided that a system dynamic range is 20 dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned SOA gain values of 10dB and 15dB, respectively. In this way, the ONU corresponding to the incident power on SOA of [-40dBm, -30dBm] may be registered in the time slot with an SOA gain of 15dB, and the ONU corresponding to the incident power on SOA of [- 30dBm, - 20dBm] may be registered in the time slot with an SOA gain of 10dB.

In a certain registration time slot, the OLT allocates a gain to the SOA through the DBA-based output power control module and transmits a downlink signal which includes downlink transmitting power information of an OLT, and notifies an eligible ONU to transmit an uplink signal.

The eligible ONU refers to an ONU in which a value obtained by the ONU transmitting power subtracting uplink attenuation, that is, the incident power value on SOA, falls into a power range specified by the time slot.

The ONU obtains the light transmitting power of the OLT through the downlink signal and calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. The uplink signal is amplified by the SOA with the pre-assigned gain and then filtered by the filter to remove ASE noises. The receiver receives the filtered signal and measures the light power of the same. The OLT records the gain value of the SOA and the ONU ID at this time, completes the registration, and establishes a relationship between the ONU ID and the SOA gain. The registration process may be performed in four channels at the same time. The flowchart for one channel is shown in Fig. 4.

The established relationship between the ONU ID and the SOA gain is shown in Table 7.

Table 7

| $\lambda_0$ONU-ID | Gain [dB] |
|---|---|
| 1 | $G_1$ |
| 2 | $G_2$ |
| ... | ... |
| n | Gn |
| $\lambda_1$ONU-ID | Gain [dB] |
| 1 | $G_2$ |
| 2 | $G_1$ |
| ... | ... |
| n | Gn |
| $\lambda_2$ONU-ID | Gain [dB] |
| 1 | $G_3$ |
| 2 | $G_4$ |
| ... | ... |
| n | Gn |
| $\lambda_3$ONU-ID | Gain [dB] |
| 1 | $G_4$ |
| 2 | $G_3$ |
| ... | ... |
| n | Gn |

A second registration method: the OLT assigns a minimum gain, for example, 5dB, to the SOA through the DBA-based output power control module, and then allocates the registration time slot and transmits a downlink registration signal including a current SOA gain value.

After receiving the registration signal, the ONU determines whether it is in the registration time slot with the minimum SOA gain, if yes, transmits uplink serial number information; if no, waits for the registration time slot with the minimum SOA gain.

The uplink optical signal is amplified by the SOA, and filtered by the ASE filter before being received by the OLT receiver. If the OLT receives correctly, the current ONU ID and SOA gain value are recorded to establish a relationship between the ONU ID and the SOA gain; if the OLT fails to receive correctly, the OLT increases the SOA gain by a fixed value, for example, 5dB, and the above steps are repeated. After the SOA gain is increased to a certain value, the OLT may correctly receive the ONU uplink signals. At this time, the ONU ID and the SOA gain are recorded to establish a relationship between the ONU ID and the SOA gain, and then the registration is completed. The registration in four channels may be performed at the same time. The flowchart for one channel is shown in Fig. 5.

In a second step, the OLT calculates a time point when each of the ONU optical signal reaches the SOA according to the DBA and the link delay, and establishes a dynamic gain adjustment table based on the relationship between the ONU ID and the SOA gain obtained from the registration process, as shown in Table 8, so as to adjust SOA gain values of each channel dynamically by the DBA-based output power control module so that each of the ONUs tends to have a burst optical signal power within the working range of the receiver.

Table 8

| $\lambda_0$ ONU-ID | Time point of arriving at OLT | Burst duration | Gain (dB) |
|---|---|---|---|
| 1 | $t_1$ | a | $G_1$ |
| 2 | $t_2$ | b | $G_2$ |
| ... | ... | ... | ... |
| n | tn | n | Gn |

(continued)

| λ₁ ONU-ID | Time point of arriving at OLT | Burst duration | Gain (dB) |
|---|---|---|---|
| 1 | $t_1$ | a | $G_2$ |
| 2 | $t_2$ | b | $G_1$ |
| ... | ... | ... | ... |
| n | tn | n | Gn |
| λ₂ ONU-ID | Time point of arriving at OLT | Burst duration | Gain (dB) |
| 1 | $t_1$ | a | $G_3$ |
| 2 | $t_2$ | b | $G_4$ |
| ... | ... | ... | ... |
| n | tn | n | Gn |
| λ₃ ONU-ID | Time point of arriving at OLT | Burst duration | Gain (dB) |
| 1 | $t_1$ | a | $G_4$ |
| 2 | $t_2$ | b | $G_3$ |
| ... | ... | ... | ... |
| n | tn | n | Gn |

Optionally, during the registration stage, the OLT may fine-tune the SOA gain according to the received ONU light power so that the uplink light power reaches an optimal receiving power of the OLT receiver, for example, -18 dBm, after being amplified by the SOA. Then, the ONU ID and the SOA gain at this time are recorded so that each ONU has a one-to-one SOA gain. In this way, the uplink optical signals of each ONU may be amplified to the same optimal receiving power of the OLT.

Example 2

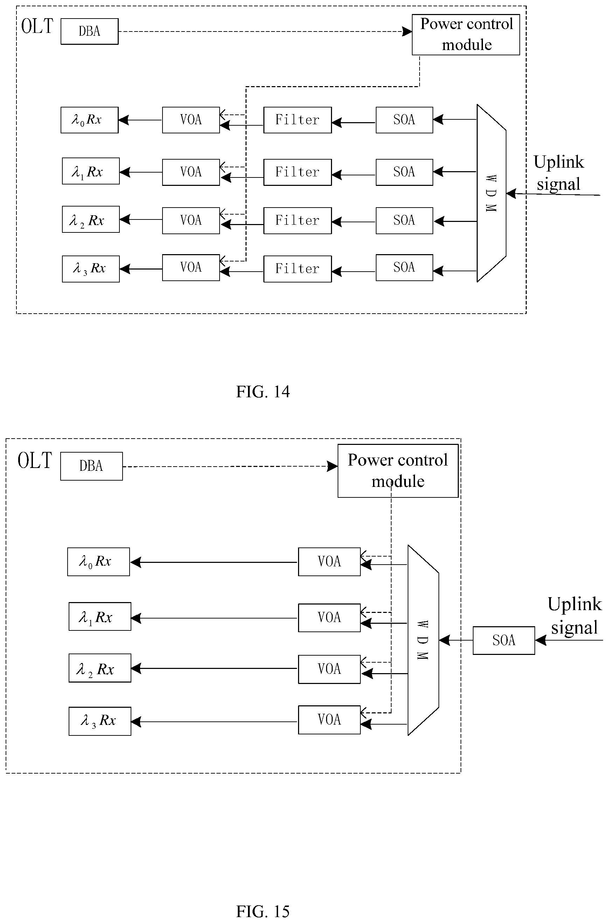

This example is similar to the above Example 1 except that the receiving power of the OLT receiver is adjusted by adjusting attenuation. As shown in Fig. 14, in this architecture, SOA actual gain for each channel = SOA fixed gain for each channel - VOA attenuation for each channel (Equation 1)

The DBA-based output power control module may consist of a memory, a controller and a driver for adjusting VOA attenuation.

In a first step, a relationship between the ONU ID and the VOA attenuation is established.

A first ONU registration method: the SOA is operated at a fixed gain, and the OLT allocates registration time slots in segments. In each time slot, the VOA has a pre-assigned attenuation that is set according to a power range that may be incident on the SOA and a receiving light power range of the OLT receiver.

For example, provided that a system dynamic range is 20 dB, the SOA is operated at a fixed gain of 20dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned VOA attenuation values 10dB and 5dB, respectively. In this way, the ONU corresponding to the incident power on SOA of [-40dBm, -30dBm] may be registered in the time slot with a VOA attenuation of 5dB, and the ONU corresponding to the incident power on SOA of [- 30dBm, - 20dBm] may be registered in the time slot with a VOA attenuation of 10dB.

In a certain registration time slot, the OLT allocates an attenuation to the VOA through the DBA-based output power control module and transmits a downlink signal which includes the transmitting power information of the OLT and notifies an eligible ONU to transmit an uplink signal.

The eligible ONU refers to an ONU in which a value obtained by the ONU transmitting power subtracting an uplink attenuation, that is, the incident power value on SOA, falls into a power range specified by the time slot. With a known light transmitting power of the OLT, the ONU calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. The uplink signal is amplified by the SOA with the fixed gain, filtered by the filter to remove ASE noises, and then attenuated by the VOA. The receiver receives the signal, measures the light power of the same, and converts the optical signal into an electrical signal to be transmitted to the MAC. The OLT records the attenuation value of the VOA and the ONU ID at this time, completes the registration, and establishes a relationship between the ONU ID and the VOA attenuation. The registration processes in four channels may be performed at the same time. The flowchart for one channel is shown in Fig. 8.

The established form of the ONU ID and the VOA attenuation is shown in Table 9.

Table 9

| $\lambda_0$ONU-ID | Attenuation [dB] | Actual gain [dB] |
|---|---|---|
| 1 | $A_1$ | $G_{\lambda 0}$-$A_1$ |
| 2 | $A_2$ | $G_{\lambda 0}$-$A_2$ |
| ... | ... | ... |
| n | An | $G_{\lambda 0}$-An |
| $\lambda_1$ ONU-ID | Attenuation [dB] | Actual gain [dB] |
| 1 | $A_2$ | $G_{\lambda 1}$-$A_2$ |
| 2 | $A_1$ | $G_{\lambda 1}$-$A_1$ |
| ... | ... | ... |
| n | An | $G_{\lambda 1}$-An |
| $\lambda_2$ ONU-ID | Attenuation [dB] | Actual gain [dB] |
| 1 | $A_3$ | $G_{\lambda 2}$-$A_3$ |
| 2 | $A_4$ | $G_{\lambda 2}$-$A_4$ |
| ... | ... | ... |
| n | An | $G_{\lambda 2}$-An |
| $\lambda_3$ ONU-ID | Attenuation [dB] | Actual gain [dB] |
| 1 | $A_4$ | $G_{\lambda 3}$-$A_4$ |
| 2 | $A_3$ | $G_{\lambda 3}$-A3 |
| ... | ... | ... |
| n | An | $G_{\lambda 3}$-An |

A second registration method: the OLT assigns a maximum attenuation, for example, 10dB, to the VOA through the DBA-based output power control module, and then allocates the registration time slot and transmits a downlink registration signal including a current SOA actual gain value (Equation 1).

After receiving the registration signal, the ONU determines whether it is in the registration time slot with the minimum SOA actual gain, if yes, transmits uplink serial number information; if no, waits for the registration time slot with the minimum SOA actual gain.

The uplink optical signal is amplified by the SOA, filtered by the ASE filter and attenuated by the VOA before being received by the OLT receiver. If the OLT receives correctly, the current ONU ID and VOA attenuation value are recorded to establish a relationship between the ONU ID and the VOA attenuation; if the OLT fails to receive correctly, the OLT decreases the VOA attenuation by a fixed value, for example, 5dB, and the above steps are repeated. After the VOA attenuation is decreased to a certain value, the OLT may correctly receive the ONU uplink signals. At this time, the ONU ID and the VOA attenuation are recorded to establish a relationship between the ONU ID and the VOA attenuation, and then the registration is completed. The registration in four channels may be performed at the same time. The flowchart for one channel is shown in Fig. 9.

In a second step, the OLT calculates a time point when each of the ONU optical signal reaches the VOA according to the DBA and the link delay, and establishes a dynamic gain adjustment table based on the relationship between the ONU ID and the VOA attenuation obtained from the registration process, as shown in Table 10, so as to adjust the VOA attenuation value dynamically by the DBA-based output power control module so that each of the ONUs tends to have the same burst optical signal power.

Table 10

| $\lambda_0$ ONU-ID | Time point of arriving at OLT | Burst duration | Attenuation (dB) | Actual gain [dB] |
|---|---|---|---|---|
| 1 | $t_1$ | a | $A_1$ | $G_{\lambda 0}$-$A_1$ |
| 2 | $t_2$ | b | $A_2$ | $G_{\lambda 0}$-$A_2$ |
| ... | ... | ... | ... | ... |
| n | tn | n | An | $G_{\lambda 0}$-An |
| $\lambda_1$ ONU-ID | Time point of arriving at OLT | Burst duration | Attenuation (dB) | Actual gain [dB] |
| 1 | $t_1$ | a | $A_2$ | $G_{\lambda 1}$-$A_2$ |
| 2 | $t_2$ | b | $A_1$ | $G_{\lambda 1}$-$A_1$ |
| ... | ... | ... | ... | ... |
| n | tn | n | An | $G_{\lambda 1}$-An |
| $\lambda_2$ ONU-ID | Time point of arriving at OLT | Burst duration | Attenuation (dB) | Actual gain [dB] |
| 1 | $t_1$ | a | $A_3$ | $G_{\lambda 2}$-$A_3$ |
| 2 | $t_2$ | b | $A_4$ | $G_{\lambda 2}$-$A_4$ |
| ... | ... | ... | ... | ... |
| n | tn | n | An | $G_{\lambda 2}$-An |
| $\lambda_3$ ONU-ID | Time point of arriving at OLT | Burst duration | Attenuation (dB) | Actual gain [dB] |
| 1 | $t_1$ | a | $A_4$ | $G_{\lambda 3}$-$A_4$ |
| 2 | $t_2$ | b | $A_3$ | $G_{\lambda 3}$-$A_3$ |
| ... | ... | ... | ... | ... |
| n | tn | n | An | $G_{\lambda 3}$-An |

Optionally, during the registration stage, the OLT may fine-tune the VOA attenuation according to the received ONU light power so that the uplink light power reaches an optimal receiving power of the OLT receiver, for example, -18 dBm, after being amplified by the SOA and attenuated by the VOA. Then, the ONU ID and the VOA attenuation at this time are recorded so that each ONU has a one-to-one VOA attenuation. In this way, the uplink optical signals of each ONU may be amplified to the same optimal receiving power of the OLT receiver.

Example 3

Example 3 is similar to Examples 1 and 2 except that the receiving power of the OLT receiver is adjusted by adjusting both the SOA gain and the VOA attenuation. This has the advantage of reducing requirements on the adjusting range of the SOA and the VOA. In the architecture as shown in Fig. 14, SOA actual gain for each channel = SOA gain for each channel - VOA attenuation for each channel (Equation 2).

The DBA-based output power control module may consist of a memory, a controller, and a driver for adjusting an SOA gain and VOA attenuation.

In a first step, a relationship between the ONU ID, the SOA gain, and the VOA attenuation is established.

A first ONU registration method: the OLT allocates registration time slots in segments. In each time slot, the SOA is provided with a pre-assigned gain, the VOA is provided with a pre-assigned attenuation, and a difference between the two is called an SOA actual gain.

This pre-assigned actual gain is set according to a power range that may be incident on the SOA and a receiving light power range of the OLT receiver. For example, provided that a system dynamic range is 20 dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned SOA actual gain values 10dB and 15dB, respectively. Accordingly, when the actual gain value is 10dB, the SOA gain may be 15dB, and the VOA attenuation may be 5dB; when the actual gain value is 15dB, the SOA gain may be 17dB, and the VOA attenuation may be 2dB. In this way, when the SOA or the VOA alone is desired to be adjusted by a range of 5dB, adjusting both of them may decrease the range to 2dB and 3dB.

The ONU corresponding to the incident power on SOA of [-40 dBm, -30 dBm] may be registered in a time slot with an SOA actual gain of 5dB, and the ONU corresponding to the incident power on SOA of [- 30dBm, - 20dBm] may be registered in the time slot with an SOA actual gain of 10dB.

In a certain registration time slot, The OLT assigns a gain to the SOA, and attenuation to the VOA through the DBA-based output power control module, and transmits a downlink signal which includes the transmitting power information of the OLT and notifies an eligible ONU to transmit an uplink signal.

The eligible ONU refers to an ONU in which a value obtained by the ONU transmitting power subtracting uplink attenuation, that is, the incident power value on SOA, falls into a power range specified by the time slot. With a known light transmitting power of the OLT, the ONU calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. After the uplink signal is amplified by the SOA, filtered by the filter to remove ASE noises, and then attenuated by the VOA, the receiver receives the filtered signal, measures the light power of the same, and converts the optical signal into an electrical signal to be transmitted to the MAC. The OLT records the SOA gain value, the VOA attenuation value, and the ONU ID at this time, completes the registration, and establishes a relationship between the ONU ID, the SOA gain and the VOA attenuation. The registration in four channels may be performed at the same time. The registration flowchart for one channel is shown in Fig. 10.

The established form of the ONU ID, the SOA gain, and the VOA attenuation is shown in Table 11.

Table 11

| $\lambda_0$ONU-ID | SOA gain [dB] | VOA attenuation [dB] | Actual gain [dB] |
| --- | --- | --- | --- |
| 1 | $G_1$ | $A_1$ | $G_1$-$A_1$ |
| 2 | $G_2$ | $A_2$ | $G_2$-$A_2$ |
| ... | ... | ... | ... |
| n | Gn | An | Gn-An |
| $\lambda_1$ ONU-ID | SOA gain [dB] | VOA attenuation [dB] | Actual gain [dB] |
| 1 | $G_2$ | $A_2$ | $G_2$-$A_2$ |
| 2 | $G_1$ | $A_1$ | $G_1$-$A_1$ |
| ... | ... | ... | ... |
| n | Gn | An | Gn-An |
| $\lambda_2$ ONU-ID | SOA gain [dB] | VOA attenuation [dB] | Actual gain [dB] |
| 1 | $G_3$ | $A_3$ | $G_3$-$A_3$ |
| 2 | $G_4$ | $A_4$ | $G_4$-$A_4$ |
| ... | ... | ... | ... |
| n | Gn | An | Gn-An |
| $\lambda_3$ ONU-ID | SOA gain [dB] | VOA attenuation [dB] | Actual gain [dB] |
| 1 | $G_4$ | $A_4$ | $G_4$-$A_4$ |
| 2 | $G_3$ | $A_3$ | $G_3$-$A_3$ |
| ... | ... | ... | ... |
| n | Gn | An | Gn-An |

A second registration method: the OLT assigns a minimum actual gain, for example, 5dB, to the SOA through the DBA-based output power control module. This actual gain may be obtained from an SOA gain of 10dB and a VOA attenuation of 5dB. The OLT then allocates the registration time slot and transmits a downlink registration signal including a current SOA actual gain value (Equation 2). After receiving the registration signal, the ONU determines whether it is in the registration time slot with the minimum SOA actual gain if yes, transmits uplink serial number information; if no, waits for the registration time slot with the minimum SOA actual gain.

The uplink optical signal is amplified by the SOA, filtered by the ASE filter and attenuated by the VOA before being received by the OLT receiver. If the OLT receives correctly, the current ONU ID, SOA gain value, and VOA attenuation value are recorded to establish a relationship between the ONU ID, the SOA gain, and the VOA attenuation; if the OLT fails to receive correctly, the OLT increases the SOA actual gain by a fixed value, for example, 5dB, for example, by increasing the SOA gain to 13dB and decreasing the VOA attenuation to 3dB, and then the above steps are repeated.

After the SOA actual gain is increased to a certain value, the OLT may correctly receive the ONU uplink signals. At this time, the ONU ID, the SOA gain, and the VOA attenuation are recorded to establish a relationship between the ONU ID, the SOA gain, and the VOA attenuation, and then the registration is completed. The flowchart is shown in Fig. 11.

In a second step, the OLT calculates a time point when each of the ONU optical signal reaches the SOA according to the DBA and the link delay, and establishes a dynamic gain adjustment table based on the relationship between the ONU ID, the SOA gain, and the VOA attenuation obtained from the registration process, as shown in Table 12, so as to adjust the SOA gain value and the VOA attenuation value dynamically by the DBA-based output power control module so that each of the ONUs tends to have the same burst optical signal power.

Table 12

| $\lambda_0$ ONU-ID | Time point of arriving at OLT | Burst duration | SOA gain (dB) | VOA attenuation (dB) | Actual gain (dB) |
|---|---|---|---|---|---|
| 1 | $t_1$ | a | $G_1$ | $A_1$ | $G_1$-$A_1$ |
| 2 | $t_2$ | b | $G_2$ | $A_2$ | $G_2$-$A_2$ |
| ... | ... | ... | ... | ... | ... |
| n | tn | n | Gn | An | Gn-An |
| $\lambda_1$ ONU-ID | Time point of arriving at OLT | Burst duration | SOA gain (dB) | VOA attenuation (dB) | Actual gain (dB) |
| 1 | $t_1$ | a | $G_2$ | $A_2$ | $G_2$-$A_2$ |
| 2 | $t_2$ | b | $G_1$ | A1 | $G_1$-$A_1$ |
| ... | ... | ... | ... | ... | ... |
| n | tn | n | Gn | An | Gn-An |
| $\lambda_2$ ONU-ID | Time point of arriving at OLT | Burst duration | SOA gain (dB) | VOA attenuation (dB) | Actual gain (dB) |
| 1 | $t_1$ | a | $G_3$ | $A_3$ | $G_3$-$A_3$ |
| 2 | $t_2$ | b | $G_4$ | $A_4$ | $G_4$-$A_4$ |
| ... | ... | ... | ... | ... | ... |
| n | tn | n | Gn | An | Gn-An |
| $\lambda_3$ ONU-ID | Time point of arriving at OLT | Burst duration | SOA gain (dB) | VOA attenuation (dB) | Actual gain (dB) |
| 1 | $t_1$ | a | $G_4$ | $A_4$ | $G_4$-$A_4$ |
| 2 | $t_2$ | b | $G_3$ | $A_3$ | $G_3$-$A_3$ |
| ... | ... | ... | ... | ... | ... |
| n | tn | n | Gn | An | Gn-An |

Optionally, during the registration stage, the OLT may fine-tune the SOA gain and the VOA attenuation according to the received ONU light power so that the uplink light power reaches an optimal receiving power of the OLT receiver, for example, -18 dBm, after being amplified by the SOA and attenuated by the VOA. Then, the ONU ID, the SOA gain, and the VOA attenuation at this time are recorded so that each ONU has a one-to-one SOA gain and VOA attenuation. In this way, the uplink optical signals of each ONU may be amplified to the same optimal receiving power of the OLT receiver.

Example 4

This example is similar to Example 2 except that each channel of uplink signals are amplified by a shared SOA, and attenuated by the VOA after WDM (Wavelength Division Multiplexing) and filtering so that the attenuated signal light power falls into a receiving range of the receiver. As shown in Fig. 15, a decreased number of SOAs are used in this example. SOA actual gain for each channel = shared SOA fixed gain - VOA attenuation for each channel (Equation 3).

The DBA-based output power control module may consist of a memory, a controller and a driver for adjusting VOA attenuation.

In a first step, a relationship between the ONU ID and the VOA attenuation is established.

In a first ONU registration method, the shared SOA is operated at a fixed gain, and the OLT allocates registration time slots in segments for each channel. In each time slot, the VOA has a pre-assigned attenuation that is set according to a power range that may be incident on the SOA and a receiving light power range of the OLT receiver.

For example, for a single channel, provided that a system dynamic range is 20 dB, the shared SOA is operated at a fixed gain of 20dB, an incident light power range on SOA is [-40 dBm, -20 dBm], and a receiving power range of the OLT receiver is [-28 dBm, -8 dBm], then two registration time slots may be allocated in segments, and each of the two registration time slots correspond to the pre-assigned VOA attenuation values 10dB and 5dB, respectively. In this way, the ONU corresponding to the incident power on SOA of [-40dBm, -30dBm] may be registered in the time slot with a VOA attenuation of 5dB, and the ONU corresponding to the incident power on SOA of [- 30dBm, - 20dBm] may be registered in the time slot with a VOA attenuation of 10dB. When the light powers incident on the SOA from different channels are inconsistent, the SOA may have a fixed gain since the VOA may be adjusted independently for each channel.

In a certain registration time slot, the OLT allocates attenuation to the VOA through the DBA-based output power control module and transmits a downlink signal which includes the transmitting power information of the OLT and notifies an eligible ONU to transmit an uplink signal.

The eligible ONU refers to an ONU in which a value obtained by the ONU transmitting power subtracting uplink attenuation, that is, the incident power value on SOA, falls into a power range specified by the time slot. With a known light transmitting power of the OLT, the ONU calculates the uplink attenuation according to the received downlink optical signal power. The uplink attenuation is obtained by the light transmitting power of the OLT subtracting a downlink optical signal power value received by the ONU. Then, the ONU determines whether the uplink light power to the SOA meets the power requirement of the allocated time slot based on a value obtained by a light transmitting power of a transmitter of its own subtracting the value of the uplink attenuation, if not, waits for the next allocated time slot; if yes, transmits an uplink ONU serial number to start registration. The uplink signal is amplified by the SOA with the fixed gain, filtered by the filter to remove ASE noises, and then attenuated by the VOA. The receiver receives the signal, measures the light power of the same, and converts the optical signal into an electrical signal to be transmitted to the MAC. The OLT records the attenuation value of the VOA and the ONU ID at this time, completes the registration, and establishes a relationship between the ONU ID and the VOA attenuation. The registration processes in four channels may be performed at the same time. The flowchart for one channel is shown in Fig. 8. The established form of the ONU ID and the VOA attenuation is shown in Table 13.

Table 13

| $\lambda_0$ ONU-ID | Attenuation [dB] | Actual gain [dB] |
| --- | --- | --- |
| 1 | $A_1$ | $G_{share}$-$A_1$ |
| 2 | $A_2$ | $G_{share}$ -$A_2$ |
| ... | ... | ... |
| n | An | Gshare -An |
| $\lambda_1$ ONU-ID | Attenuation [dB] | Actual gain [dB] |
| 1 | $A_2$ | $G_{share}$ -$A_2$ |
| 2 | $A_1$ | $G_{share}$ -$A_1$ |
| ... | ... | ... |
| n | An | Gshare -An |
| $\lambda_2$ ONU-ID | Attenuation [dB] | Actual gain [dB] |
| 1 | $A_3$ | $G_{share}$ -$A_3$ |
| 2 | $A_4$ | $G_{share}$ -$A_4$ |
| ... | ... | ... |
| n | An | $G_{share}$ -An |

(continued)

| $\lambda_3$ ONU-ID | Attenuation [dB] | Actual gain [dB] |
|---|---|---|
| 1 | $A_4$ | $G_{share}$ -$A_4$ |
| 2 | $A_3$ | $G_{share}$ -$A_3$ |
| ... | ... | ... |
| n | An | Gshare -An |

A second registration method: the OLT assigns a maximum attenuation, for example, 10dB, to the VOA through the DBA-based output power control module. The OLT then allocates the registration time slot and transmits a downlink registration signal including a current SOA actual gain value (Equation 3).

After receiving the registration signal, the ONU determines whether it is in the registration time slot with the minimum SOA actual gain if yes, transmits uplink serial number information; if no, waits for the registration time slot with the minimum SOA actual gain.

The uplink optical signal is amplified by the SOA, filtered by the ASE filter and attenuated by the VOA before being received by the OLT receiver. If the OLT receives correctly, the current ONU ID and VOA attenuation value are recorded to establish a relationship between the ONU ID and the VOA attenuation; if the OLT fails to receive correctly, the OLT decreases the VOA attenuation by a fixed value, for example, 5dB, and the above steps are repeated. After the VOA attenuation is decreased to a certain value, the OLT may correctly receive the ONU uplink signals. At this time, the ONU ID and the VOA attenuation are recorded to establish a relationship between the ONU ID and the VOA attenuation, and then the registration is completed. The registration in four channels may be performed at the same time. The flowchart for one channel is shown in Fig. 9.

In a second step, the OLT calculates a time point when each of the ONU optical signal reaches the VOA according to the DBA and the link delay, and establishes a dynamic gain adjustment table based on the relationship between the ONU ID and the VOA attenuation obtained from the registration process, as shown in Table 14, so as to adjust the VOA attenuation value dynamically by the DBA-based output power control module so that each of the ONUs tends to have the same burst optical signal power.

Table 14

| $\lambda_0$ ONU-ID | Time point of arriving at OLT | Burst duration | Attenuation (dB) | Actual gain [dB] |
|---|---|---|---|---|
| 1 | $t_1$ | a | $A_1$ | $G_{share}$-$A_1$ |
| 2 | $t_2$ | b | $A_2$ | $G_{share}$ -$A_2$ |
| ... | ... | ... | ... | ... |
| n | tn | n | An | $G_{share}$ -An |
| $\lambda_1$ ONU-ID | Time point of arriving at OLT | Burst duration | Attenuation (dB) | Actual gain [dB] |
| 1 | $t_1$ | a | $A_2$ | $G_{share}$ -$A_2$ |
| 2 | $t_2$ | b | $A_1$ | $G_{share}$ -$A_1$ |
| ... | ... | ... | ... | ... |
| n | tn | n | An | $G_{share}$ -$A_n$ |
| $\lambda_2$ ONU-ID | Time point of arriving at OLT | Burst duration | Attenuation (dB) | Actual gain [dB] |
| 1 | $t_1$ | a | $A_3$ | $G_{share}$ -$A_3$ |
| 2 | $t_2$ | b | $A_4$ | $G_{share}$ -$A_4$ |
| ... | ... | ... | ... | ... |
| n | tn | n | $A_n$ | $G_{share}$ -An |
| $\lambda_3$ ONU-ID | Time point of arriving at OLT | Burst duration | Attenuation (dB) | Actual gain [dB] |
| 1 | $t_1$ | a | $A_4$ | $G_{share}$ -$A_4$ |
| 2 | $t_2$ | b | $A_3$ | $G_{share}$ -$A_3$ |
| ... | ... | ... | ... | ... |

(continued)

| $\lambda_3$ ONU-ID | Time point of arriving at OLT | Burst duration | Attenuation (dB) | Actual gain [dB] |
|---|---|---|---|---|
| n | tn | n | An | $G_{share} - A_n$ |

Optionally, during the registration stage, the OLT may fine-tune the VOA attenuation according to the received ONU light power so that the uplink light power reaches an optimal receiving power of the OLT receiver, for example, -18 dBm, after being amplified by the SOA and attenuated by the VOA. Then, the ONU ID and the VOA attenuation at this time are recorded so that each ONU has a one-to-one VOA attenuation. In this way, the uplink optical signals of each ONU may be amplified to the same optimal receiving power of the OLT.

Example 5

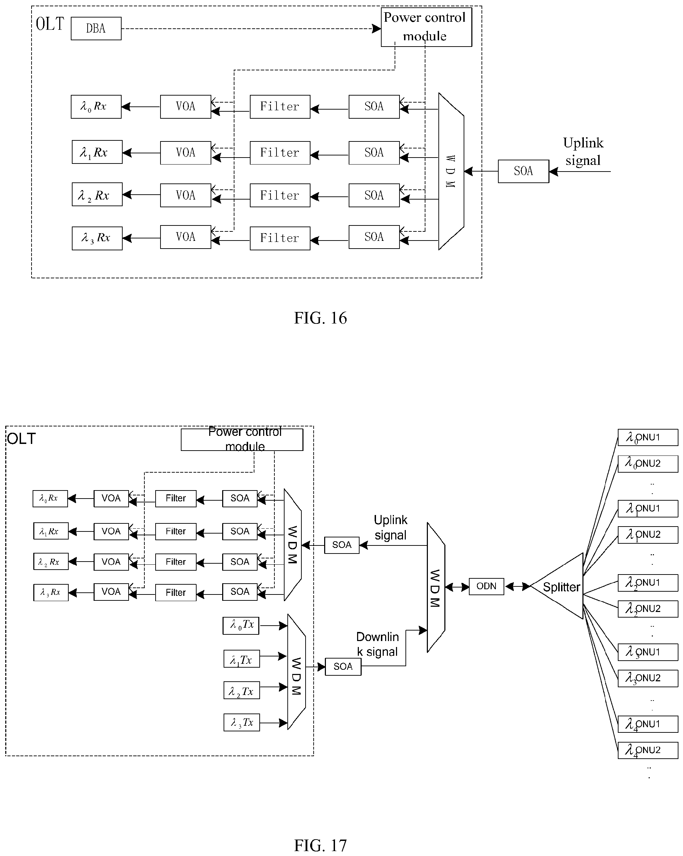

In this example, as shown in Fig. 16, signals of four channels are each firstly amplified by one SOA, and then further amplified by the SOA again, filtered and attenuated before received by the receiver. The power control module controls the SOA gain and the VOA attenuation for each channel based on DBA so that the receiving light power of the receiver is within the working range of the receiver. This example is similar to Example 3 except that the uplink signal is firstly amplified by a shared SOA before being divided through WDM, and then further amplified by the SOA and attenuated by the VOA in each channel.

The entire system is shown in Fig. 17, in which the amplification of the uplink signal may be flexibly selected according to the different embodiments described above.

Through the description of the above embodiment, those skilled in the art can clearly understand that the method according to the above embodiment may be implemented by means of software plus a necessary general hardware platform. Obviously, it may also be implemented by hardware, but in most cases, the former is preferable. Based on such understanding, the technical solutions of the present invention essentially or, in other words, a part thereof contributing to the prior art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the various embodiments of the present disclosure.

Embodiment 2

In this embodiment, there is further provided an optical signal power control device configured to implement the above embodiments and preferable implementations. Details which have been explained will not be repeated here. As used herein, the term "module" may be a combination of software and/or hardware that can realize a preset function. Although the devices described in the following embodiment is preferably implemented in software, hardware, or a combination of software and hardware, is also possible and contemplated.

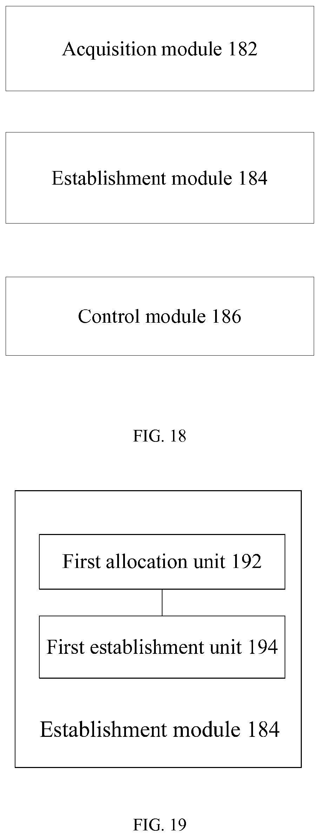

Fig. 18 is a structural block diagram of an optical signal power control device according to an embodiment of the present disclosure. As shown in Fig. 18, the device includes:

1) an acquisition module 182 configured to acquire different time points when uplink optical signals of optical network units (ONUs) arrive at an optical signal amplifier;
2) an establishment module 184 configured to establish a correspondence relationship between an ONU ID and a power control factor of the uplink optical signals; and
3) a control module 186 configured to perform power control on the uplink optical signals according to the different time points and the correspondence relationship.

In this embodiment, an application scenario of the foregoing optical signal amplification device includes Passive Optical Network (PON). In this application scenario, by acquiring different time points when uplink optical signals of optical network units (ONUs) arrive at an optical signal amplifier or a variable optical attenuator; establishing a correspondence relationship between an ONU ID and a power control factor of the uplink optical signals; and performing power control on the uplink optical signals according to the different time points and the correspondence relationship, the uplink burst signals of the ONU are amplified to a range receivable by the OLT receiver, thereby solving the problem of equalizing uplink burst signal amplification in an optical network unit (ONU) in the related art, and achieving the technical effect of reducing requirements on the receiving power range of the OLT receiver.

It should be noted that, in this embodiment, the number of optical signal amplifiers includes but is limited to: one or more than one; and the number of variable optical attenuators includes but is not limited to: one or more than one.

Optionally, in the embodiment, the optical signal amplifier is mainly described by taking a semiconductor amplifier (SOA) as an example.

Optionally, the power control factor includes at least one of: a gain of the optical signal amplifier, and an attenuation of the variable optical attenuator.

Fig. 19 is a structural block diagram (I) of an optical signal power control device according to an embodiment of the present disclosure. As shown in Fig. 19, the establishment module 184 includes:

1) a first allocation unit 192 configured to allocate a registration time slot and transmit a downlink registration signal when the power control factor is a gain of the optical signal amplifier; and

2) a first establishment unit 194 configured to start, when the ONU receives the downlink registration signal and determines that a power requirement of the registration time slot is met, registration and establishment of a correspondence relationship between the ONU ID and the gain of the optical signal amplifier.

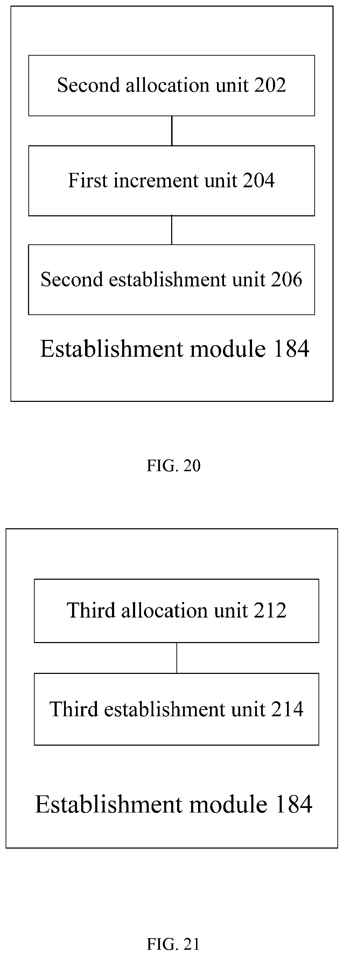

Fig. 20 is a structural block diagram (II) of an optical signal power control device according to an embodiment of the present disclosure. As shown in Fig. 20, the establishment module 184 includes:

1) a second allocation unit 202 configured to allocate a registration time slot and transmit a downlink registration signal when the power control factor is a gain of the optical signal amplifier, wherein the downlink registration signal includes gain information of the optical signal amplifier;

2) a first increment unit 204 configured to increase, when the ONU receives the downlink registration signal and determines that the downlink registration signal is in a registration time slot with a minimum gain of the optical signal amplifier, the gain of the optical signal amplifier until a serial number transmitted by the ONU is correctly received.

3) a second establishment unit 206 configured to establish a correspondence relationship between the ONU ID and the gain of the optical signal amplifier.

Fig. 21 is a structural block diagram (III) of an optical signal power control device according to an embodiment of the present disclosure. As shown in Fig. 21, the establishment module 184 includes:

1) a third allocation unit 212 configured to allocate a registration time slot and transmit a downlink registration signal when the power control factor is an attenuation of the variable optical attenuator, wherein the registration time slot is pre-assigned an attenuation value.

2) a third establishment unit 214 configured to start, when the ONU receives the downlink registration signal and determines a power requirement of the registration time slot is met, registration and establishment of a correspondence relationship between the ONU ID and the attenuation of the variable optical attenuator.

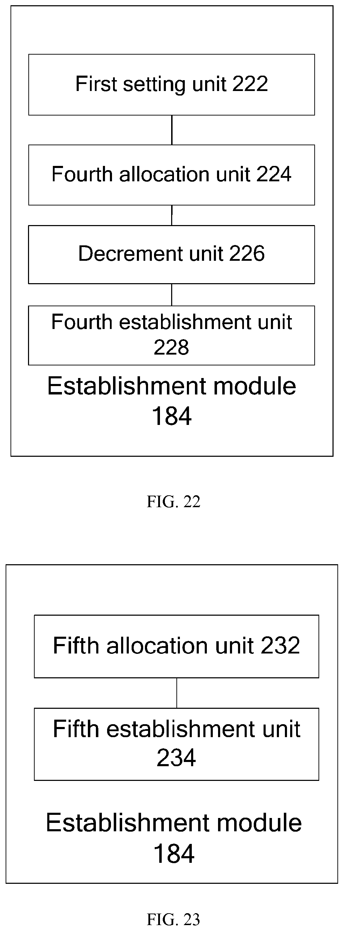

Fig. 22 is a structural block diagram (IV) of an optical signal power control device according to an embodiment of the present disclosure. As shown in Fig. 22, the establishment module 184 includes:

1) a first setting unit 222 configured to set, when the power control factor is an attenuation of the variable optical attenuator, the attenuation of the variable optical attenuator to maximum;

2) a fourth allocation unit 224 configured to allocate a registration time slot and transmit a downlink registration signal, wherein the downlink registration signal includes attenuation information of the variable optical attenuator.

3) a decrement unit 226 configured to decrease, when the ONU receives the downlink registration signal and determines the downlink registration signal is in a registration time slot with a minimum actual gain of the optical signal amplifier, the attenuation of the variable optical attenuator until a serial number transmitted by the ONU is correctly received; and

4) a fourth establishment unit 228 configured to establish a relationship between the ONU ID and the attenuation of the variable optical attenuator.

Fig. 23 is a structural block diagram (V) of an optical signal power control device according to an embodiment of the present disclosure. As shown in Fig. 23, the establishment module 184 includes:

1) a fifth allocation unit 232 configured to allocate a registration time slot and transmit a downlink registration signal when the power control factor is a gain of the optical signal amplifier and an attenuation of the variable optical attenuator, wherein in the registration time slot, the optical signal amplifier is provided with a pre-assigned gain, and the variable optical attenuator is provided with a pre-assigned attenuation.

2) a fifth establishment unit 234 configured to start, when the ONU receives the downlink registration signal and determines a power requirement of the registration time slot is met, registration and establishment of a correspondence relationship between the ONU ID, the gain of the optical signal amplifier, and the attenuation of the variable optical attenuator.

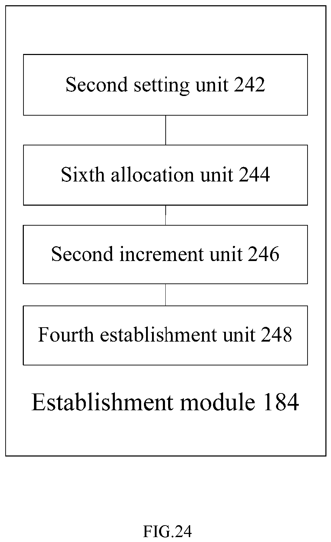

Fig. 24 is a structural block diagram (VI) of an optical signal power control device according to an embodiment of the present disclosure. As shown in Fig. 24, the establishment module 184 includes:

1) a second setting unit 242 configured to set an actual gain of the optical signal amplifier to minimum when the power control factor is a gain of the optical signal amplifier and an attenuation of the variable optical attenuator;

2) a sixth allocation unit 244 configured to allocate a registration time slot and transmit a downlink registration signal, wherein the downlink registration signal includes actual gain information of the optical signal amplifier.

3) a second increment unit 246 configured to increase, when the ONU receives the downlink registration signal and determines the downlink registration signal is in a registration time slot with a minimum actual gain of the optical signal amplifier, the gain of the optical signal amplifier until a serial number transmitted by the ONU is correctly received; and

4) a sixth establishment unit 248 configured to establish a correspondence relationship between the ONU ID, the gain of the optical signal amplifier, and the attenuation of the variable optical attenuator.

Optionally, a plurality of optical signal amplifiers or variable optical attenuators are provided. When a plurality of optical signal amplifiers or variable optical attenuators are provided, a plurality of correspondence relationships are provided, wherein each of the plurality of correspondence relationships is a relationship between each channel of ONU IDs and a power control factor of the corresponding uplink optical signals.

Optionally, before reaching the plurality of optical signal amplifiers and/or variable optical attenuators, the uplink optical signals are subjected to corresponding power control via a shared optical signal amplifier.

It should be noted that each of the above modules may be implemented by software or hardware. For the latter, it may be implemented by, but are not limited to: the above modules all located in the same processor; or, the above modules each located in different processors in any combination.

Embodiment 3

In an embodiment of the present disclosure, there is also provided an optical line terminal (OLT), including the device according to Embodiment 2.

Embodiment 4

In an embodiment of the present disclosure, there is also provided a storage medium. Optionally, in the present embodiment, the storage medium may be configured to store a program code for performing the following steps S1 to S3:

At step S1, acquiring different time points when uplink optical signals of optical network units (ONUs) arrive at an optical signal amplifier or a variable optical attenuator;

At step S2, establishing a correspondence relationship between an ONU ID and a power control factor of the uplink optical signals.

At step S3, performing power control on the uplink optical signals according to the different time points and the correspondence relationship.

Optionally, in the present embodiment, the storage medium may include, but is not limited to: a U Disk, a read only memory (ROM), a random access memory (RAM), a mobile hard disk, a disk or optical disk, and other medium that can store a program code.

Optionally, in the present embodiment, the processor executes the above steps S1 to S3 according to the stored program code in the storage medium.

Optionally, specific examples in this embodiment may refer to the examples described in the foregoing embodiments and optional implementations, which will not be repeated herein.

In an embodiment of the present disclosure, there is further provided an electronic device, including a memory storing a computer program thereon, and a processor configured to execute the computer program to perform steps of any of the method embodiments as described above.

Optionally, the electronic device may further include a transmission device, and an input and output device, wherein the transmission device is coupled to the processor, and the input and output device is coupled to the processor.

Obviously, a person skilled in the art would understand that the above modules and steps of the present disclosure can be realized by using a universal computing device, can be integrated in a single computing device or distributed on a network that consists of a plurality of computing devices; and alternatively, they can be realized by using the executable program code of the computing device, so that they can be stored in a storage device and executed by the computing device, in some cases, can perform the steps shown or described in a sequence other than herein, or they are made into various integrated circuit modules respectively, or a plurality of modules or steps thereof are made into a single integrated circuit module, thus to be realized. In this way, the present disclosure is not restricted to any particular hardware and software combination.

The descriptions above are only optional embodiments of the present disclosure, which are not used to restrict the present disclosure.

## Claims

1. An optical signal power control method configured in a passive optical network, PON, comprising:

   acquiring (S102) different time points when uplink optical signals of optical network units ONUs arrive at an optical signal amplifier or a variable optical attenuator;
   allocating (S11) a registration time slot and transmitting a downlink registration signal comprising a power requirement of the registration slot;
   receiving (S12) uplink ONU serial number, starting registration and establishing (S104) a correspondence relationship between an ONU ID and a power control factor of the uplink optical signals, wherein the uplink ONU serial number is transmitted by ONU in response to determining that the ONU receives the downlink registration signal and determines that the power requirement of the registration time slot is met; and
   performing (S106) power control on the uplink optical signals according to the different time points and the correspondence relationship.

2. The method according to claim 1, wherein the power control factor comprises at least one of:
   a gain of the optical signal amplifier, and an attenuation of the variable optical attenuator.

3. The method according to claim 2, wherein when the power control factor is a gain of the optical signal amplifier, the step (S104) of establishing the correspondence relationship between the ONU ID and the power control factor of the uplink optical signals comprises:
   establishing a correspondence relationship between the ONU ID and the gain of the optical signal amplifier.

4. The method according to claim 2, wherein when the power control factor is a gain of the optical signal amplifier, the downlink registration signal includes gain information of the optical signal amplifier;
   the step (S104) of establishing the correspondence relationship between the ONU ID and the power control factor of the uplink optical signals comprises:

   increasing (S14), when the ONU receives the downlink registration signal and determines that the downlink registration signal is in a registration time slot with a minimum gain of the optical signal amplifier, the gain of the optical signal amplifier until a serial number transmitted by the ONU is correctly received; and
   establishing (S15) a correspondence relationship between the ONU ID and the gain of the optical signal amplifier.

5. The method according to claim 2, wherein when the power control factor is an attenuation of the variable optical attenuator, the registration time slot is pre-assigned an attenuation value; and
   the step (S104) of establishing the correspondence relationship between the ONU ID and the power control factor of the uplink optical signals comprises:
   starting (S22), when the ONU receives the downlink registration signal and determines that a power requirement of the registration time slot is met, registration and establishment of a correspondence relationship between the ONU ID and the attenuation of the variable optical attenuator.

6. The method according to claim 2, wherein when the power control factor is an attenuation of the variable optical attenuator, the downlink registration signal comprises attenuation information of the variable optical attenuator;
   before the step (S104) of establishing the correspondence relationship between the ONU ID and the power control factor of the uplink optical signals, the method further comprises:

   setting (S23) the attenuation of the variable optical attenuator to maximum;
   the step (S104) of establishing the correspondence relationship between the ONU ID and the power control factor of the uplink optical signals comprises:

decreasing (S25), when the ONU receives the downlink registration signal and determines that the downlink registration signal is in a registration time slot with a minimum actual gain of the optical signal amplifier, the attenuation of the variable optical attenuator until a serial number transmitted by the ONU is correctly received; and

establishing (S26) a relationship between the ONU ID and attenuation of the variable optical attenuator.

7. The method according to claim 2, wherein when the power control factor is a gain of the optical signal amplifier and an attenuation of the variable optical attenuator, in the registration time slot, the optical signal amplifier is provided with a pre-assigned gain, and the variable optical attenuator is provided with a pre-assigned attenuation; and

the step (S104) of establishing the correspondence relationship between the ONU ID and the power control factor of the uplink optical signals comprises:

starting (S32), when the ONU receives the downlink registration signal and determines that a power requirement of the registration time slot is met, registration and establishment of a correspondence relationship between the ONU ID, the gain of the optical signal amplifier, and the attenuation of the variable optical attenuator.

8. The method according to claim 2, wherein when the power control factor is a gain of the optical signal amplifier and an attenuation of the variable optical attenuator, the downlink registration signal comprises actual gain information of the optical signal amplifier ;

before the step (S104) of establishing the correspondence relationship between the ONU ID and the power control factor of the uplink optical signals, the method further comprises:

setting (S33) an actual gain of the optical signal amplifier to minimum;
the step (S104) of establishing the correspondence relationship between the ONU ID and the power control factor of the uplink optical signals comprises: increasing (S35), when the ONU receives the downlink registration signal and determines that the downlink registration signal is in a registration time slot with a minimum actual gain of the optical signal amplifier, the gain of the optical signal amplifier until a serial number transmitted by the ONU is correctly received; and
establishing (S36) a correspondence relationship between the ONU ID, the gain of the optical signal amplifier, and the attenuation of the variable optical attenuator.

9. The method according to any one of claims 1 to 8, wherein
a plurality of optical signal amplifiers or variable optical attenuators are provided.

10. The method of claim 9, wherein
before reaching the plurality of optical signal amplifiers and/or variable optical attenuators, the uplink optical signals are subjected to corresponding power control via a shared optical signal amplifier.

11. The method of claim 10, wherein when a plurality of optical signal amplifiers or variable optical attenuators are provided, a plurality of correspondence relationships are provided, wherein each of the plurality of correspondence relationships is a relationship between each channel of ONU IDs and the power control factor of the corresponding uplink optical signals.

12. An optical signal power control device, configured to implement the method according any one of claims 1-11.

13. An optical line terminal OLT, comprising: the device according to claim 12.

14. A storage medium storing a computer program, wherein storage medium installed in an OLT according to claim 13, the computer program is configured to be executed by a processor of the OLT to implement the method steps of claims 1 to 11.

15. An electronic device, comprising a memory and the OLT according to claim 13, the memory storing a computer program, and the OLT being configured to execute the computer program by a processor to implement the method steps of claim 1 to 11.

**Patentansprüche**

1. Verfahren zum Steuern der Leistung eines optischen Signals, das in einem passiven optischen Netzwerk, PON, konfiguriert ist, umfassend:

Erfassen (S102) verschiedener Zeitpunkte, zu denen optische Uplink-Signale von optischen Netzwerkeinheiten ONUs an einem optischen Signalverstärker oder einem variablen optischen Dämpfungsglied eintreffen;

Zuweisen (S11) eines Registrierungszeitschlitzes und Übertragen eines Downlink-Registrierungssignals, das eine Leistungsanforderung des Registrierungsschlitzes umfasst;

Empfangen (S12) einer Uplink-ONU-Seriennummer, Starten der Registrierung und Einrichten (S104) einer Entsprechungsbeziehung zwischen einer ONU-ID und einem Leistungssteuerungsfaktor der optischen Uplink-Signale, wobei die Uplink-ONU-Seriennummer durch die ONU als Reaktion darauf übertragen wird, dass bestimmt wird, dass die ONU das Downlink-Registrierungssignal empfängt und bestimmt, dass die Leistungsanforderung des Registrierungszeitschlitzes erfüllt ist; und

Durchführen (S106) von Leistungssteuerung an den optischen Uplink-Signalen gemäß den verschiedenen Zeitpunkten und der Entsprechungsbeziehung.

2. Verfahren nach Anspruch 1, wobei der Leistungssteuerungsfaktor Folgendes umfasst:
eine Verstärkung des optischen Signalverstärkers und/oder eine Dämpfung des variablen optischen Dämpfungsglieds.

3. Verfahren nach Anspruch 2, wobei, wenn der Leistungssteuerungsfaktor eine Verstärkung des optischen Signalverstärkers ist, der Schritt (S104) des Einrichtens der Entsprechungsbeziehung zwischen der ONU-ID und dem Leistungssteuerungsfaktor der optischen Uplink-Signale Folgendes umfasst:
Einrichten einer Entsprechungsbeziehung zwischen der ONU-ID und der Verstärkung des optischen Signalverstärkers.

4. Verfahren nach Anspruch 2, wobei, wenn der Leistungssteuerungsfaktor eine Verstärkung des optischen Signalverstärkers ist, das Downlink-Registrierungssignal Verstärkungsinformationen des optischen Signalverstärkers beinhaltet;
der Schritt (S104) des Einrichtens der Entsprechungsbeziehung zwischen der ONU-ID und dem Leistungssteuerungsfaktor der optischen Uplink-Signale Folgendes umfasst:

Erhöhen (S14), wenn die ONU das Downlink-Registrierungssignal empfängt und bestimmt, dass sich das Downlink-Registrierungssignal in einem Registrierungszeitschlitz mit einer minimalen Verstärkung des optischen Signalverstärkers befindet, der Verstärkung des optischen Signalverstärkers, bis eine durch die ONU übertragene Seriennummer korrekt empfangen wird; und

Einrichten (S15) einer Entsprechungsbeziehung zwischen der ONU-ID und der Verstärkung des optischen Signalverstärkers.

5. Verfahren nach Anspruch 2, wobei, wenn der Leistungssteuerungsfaktor eine Dämpfung des variablen optischen Dämpfungsglieds ist, dem Registrierungszeitschlitz vorab ein Dämpfungswert zugewiesen wird; und
der Schritt (S104) des Einrichtens der Entsprechungsbeziehung zwischen der ONU-ID und dem Leistungssteuerungsfaktor der optischen Uplink-Signale Folgendes umfasst:
Starten (S22), wenn die ONU das Downlink-Registrierungssignal empfängt und bestimmt, dass eine Leistungsanforderung des Registrierungszeitschlitzes erfüllt ist, Registrierung und Einrichtung einer Entsprechungsbeziehung zwischen der ONU-ID und der Dämpfung des variablen optischen Dämpfungsglieds.

6. Verfahren nach Anspruch 2, wobei, wenn der Leistungssteuerungsfaktor eine Dämpfung des variablen optischen Dämpfungsglieds ist, das Downlink-Registrierungssignal Dämpfungsinformationen des variablen optischen Dämpfungsglieds umfasst;
das Verfahren vor dem Schritt (S104) des Einrichtens der Entsprechungsbeziehung zwischen der ONU-ID und dem Leistungssteuerungsfaktor der optischen Uplink-Signale ferner Folgendes umfasst:

Einstellen (S23) der Dämpfung des variablen optischen Dämpfungsglieds auf ein Maximum;
der Schritt (S104) des Einrichtens der Entsprechungsbeziehung zwischen der ONU-ID und dem Leistungssteuerungsfaktor der optischen Uplink-Signale Folgendes umfasst:

Verringern (S25), wenn die ONU das Downlink-Registrierungssignal empfängt und bestimmt, dass sich das Downlink-Registrierungssignal in einem Registrierungszeitschlitz mit einer minimalen Ist-Verstärkung des optischen Signalverstärkers befindet, der Dämpfung des variablen optischen Dämpfungsglieds, bis eine durch die ONU übertragene Seriennummer korrekt empfangen wird; und
Einrichten (S26) einer Beziehung zwischen der ONU-ID und der Dämpfung des variablen optischen Dämpfungsglieds.

7. Verfahren nach Anspruch 2, wobei, wenn der Leistungssteuerungsfaktor eine Verstärkung des optischen Signalverstärkers und eine Dämpfung des variablen optischen Dämpfungsglieds ist, in dem Registrierungszeitschlitz der optische Signalverstärker mit einer vorab zugewiesenen Verstärkung bereitgestellt wird und das variable optische Dämpfungsglied mit einer vorab zugewiesenen Dämpfung bereitgestellt wird; und der Schritt (S104) des Einrichtens der Entsprechungsbeziehung zwischen der ONU-ID und dem Leistungssteuerungsfaktor der optischen Uplink-Signale Folgendes umfasst:
Starten (S32), wenn die ONU das Downlink-Registrierungssignal empfängt und bestimmt, dass eine Leistungsanforderung des Registrierungszeitschlitzes erfüllt ist, Registrierung und Einrichtung einer Entsprechungsbeziehung zwischen der ONU-ID, der Verstärkung des optischen Signalverstärkers und der Dämpfung des variablen optischen Dämpfungsglieds.

8. Verfahren nach Anspruch 2, wobei, wenn der Leistungssteuerungsfaktor eine Verstärkung des optischen Signalverstärkers und eine Dämpfung des variablen optischen Dämpfungsglieds ist, das Downlink-Registrierungssignal Ist-Verstärkungsinformationen des optischen Signalverstärkers umfasst;
das Verfahren vor dem Schritt (S104) des Einrichtens der Entsprechungsbeziehung zwischen der ONU-ID und dem Leistungssteuerungsfaktor der optischen Uplink-Signale ferner Folgendes umfasst:

Einstellen (S33) einer Ist-Verstärkung des optischen Signalverstärkers auf ein Minimum;
Der Schritt (S104) des Einrichtens der Entsprechungsbeziehung zwischen der ONU-ID und dem Leistungssteuerungsfaktor der optischen Uplink-Signale Folgendes umfasst: Erhöhen (S35), wenn die ONU das Downlink-Registrierungssignal empfängt und bestimmt, dass sich das Downlink-Registrierungssignal in einem Registrierungszeitschlitz mit einer minimalen Ist-Verstärkung des optischen Signalverstärkers befindet, der Verstärkung des optischen Signalverstärkers, bis eine durch die ONU übertragene Seriennummer korrekt empfangen wird; und
Einrichten (S36) einer Entsprechungsbeziehung zwischen der ONU-ID, der Verstärkung des optischen Signalverstärkers und der Dämpfung des variablen optischen Dämpfungsglieds.

9. Verfahren nach einem der Ansprüche 1 bis 8, wobei mehrere optische Signalverstärker oder variable optische Dämpfungsglieder bereitgestellt werden.

10. Verfahren nach Anspruch 9, wobei
die Uplink-optischen Signale vor Erreichen der mehreren optischen Signalverstärker und/oder variablen optischen Dämpfungsglieder über einen gemeinsam genutzten optischen Signalverstärker einer entsprechenden Leistungssteuerung unterzogen werden.

11. Verfahren nach Anspruch 10, wobei, wenn mehrere optische Signalverstärker oder variable optische Dämpfungsglieder bereitgestellt werden, mehrere Entsprechungsbeziehungen bereitgestellt werden, wobei jede der mehreren Entsprechungsbeziehungen eine Beziehung zwischen jedem Kanal von ONU-IDs und dem Leistungssteuerungsfaktor der entsprechenden optischen Uplink-Signale ist.

12. Vorrichtung zur Steuerung der Leistung eines optischen Signals, die dazu ausgelegt ist, das Verfahren nach einem der Ansprüche 1-11 zu implementieren.

13. Optischer Leitungsanschluss OLT, umfassend: die Vorrichtung nach Anspruch 12.

14. Speichermedium, das ein Computerprogramm speichert, wobei das Speichermedium in einem OLT nach Anspruch 13 installiert ist und das Computerprogramm dazu ausgelegt ist, durch einen Prozessor des OLT ausgeführt zu werden, um die Verfahrensschritte der Ansprüche 1 bis 11 zu implementieren.

15. Elektronische Vorrichtung, umfassend einen Speicher und den OLT nach Anspruch 13, wobei der Speicher ein Computerprogramm speichert und der OLT dazu ausgelegt ist, das Computerprogramm durch einen Prozessor auszuführen, um die Verfahrensschritte der Ansprüche 1 bis 11 zu implementieren.

**Revendications**

1. Procédé de contrôle de puissance de signal optique conçu dans un réseau optique passif, PON, comprenant :

   l'acquisition (S102) de différents points temporels au moment où des signaux optiques montants d'unités de réseau optique ONU arrivent à un amplificateur de signal optique ou un atténuateur optique variable ;
   l'allocation (S11) d'un intervalle de temps d'enregistrement et la transmission d'un signal d'enregistrement descendant comprenant une exigence de puissance de l'intervalle d'enregistrement ;
   la réception (S12) d'un numéro de série d'ONU en liaison montante, le démarrage de l'enregistrement et l'établissement (S104) d'une relation de correspondance entre un ID d'ONU et un facteur de contrôle de puissance des signaux optiques montants, le numéro de série d'ONU en liaison montante étant transmis par une ONU en réponse à la détermination que l'ONU reçoit le signal d'enregistrement descendant et détermine que l'exigence de puissance de l'intervalle de temps d'enregistrement est respectée ; et
   la réalisation (S106) d'un contrôle de puissance sur les signaux optiques montants en fonction des différents points temporels et de la relation de correspondance.

2. Procédé selon la revendication 1, dans lequel le facteur de contrôle de puissance comprend au moins un élément parmi :
   un gain de l'amplificateur de signal optique, et une atténuation de l'atténuateur optique variable.

3. Procédé selon la revendication 2 dans lequel, quand le facteur de contrôle de puissance est un gain de l'amplificateur de signal optique, l'étape (S104) d'établissement de la relation de correspondance entre l'ID d'ONU et le facteur de contrôle de puissance des signaux optiques montants comprend :
   l'établissement d'une relation de correspondance entre l'ID d'ONU et le gain de l'amplificateur de signal optique.

4. Procédé selon la revendication 2 dans lequel, quand le facteur de contrôle de puissance est un gain de l'amplificateur de signal optique, le signal d'enregistrement descendant comporte une information de gain de l'amplificateur de signal optique ;
   l'étape (S104) d'établissement de la relation de correspondance entre l'ID d'ONU et le facteur de contrôle de puissance des signaux optiques montants comprend :

   l'augmentation (S14), quand l'ONU reçoit le signal d'enregistrement descendant et détermine que le signal d'enregistrement descendant se trouve dans un intervalle de temps d'enregistrement avec un gain minimal de l'amplificateur de signal optique, du gain de l'amplificateur de signal optique jusqu'à ce qu'un numéro de série transmis par l'ONU soit correctement reçu ; et
   l'établissement (S15) d'une relation de correspondance entre l'ID d'ONU et le gain de l'amplificateur de signal optique.

5. Procédé selon la revendication 2 dans lequel, quand le facteur de contrôle de puissance est une atténuation de l'atténuateur optique variable, l'intervalle de temps d'enregistrement se voit préassigner une valeur d'atténuation ; et
   l'étape (S104) d'établissement de la relation de correspondance entre l'ID d'ONU et le facteur de contrôle de puissance des signaux optiques montants comprend :
   le démarrage (S22), quand l'ONU reçoit le signal d'enregistrement descendant et détermine qu'une exigence de puissance de l'intervalle de temps d'enregistrement est respectée, de l'enregistrement et de l'établissement d'une relation de correspondance entre l'ID d'ONU et l'atténuation de l'atténuateur optique variable.

6. Procédé selon la revendication 2 dans lequel, quand le facteur de contrôle de puissance est une atténuation de l'atténuateur optique variable, le signal d'enregistrement descendant comprend une information d'atténuation de l'atténuateur optique variable ;
   avant l'étape (S104) d'établissement de la relation de correspondance entre l'ID d'ONU et le facteur de contrôle de puissance des signaux optiques montants, le procédé comprend en outre :

   le réglage (S23) de l'atténuation de l'atténuateur optique variable au maximum ;
   l'étape (S104) d'établissement de la relation de correspondance entre l'ID d'ONU et le facteur de contrôle de puissance des signaux optiques montants comprend :
   la diminution (S25), quand l'ONU reçoit le signal d'enregistrement descendant et détermine que le signal d'enregistrement descendant se trouve dans un intervalle de temps d'enregistrement avec un gain réel minimal de l'amplificateur de signal optique, de l'atténuation de l'atténuateur optique variable jusqu'à ce qu'un numéro de série transmis par l'ONU soit correctement reçu ; et l'établissement (S26) d'une relation entre l'ID d'ONU et l'atténuation de l'atténuateur optique variable.

7. Procédé selon la revendication 2 dans lequel, quand le facteur de contrôle de puissance est un gain de l'amplificateur de signal optique et une atténuation de l'atténuateur optique variable, dans l'intervalle de temps d'enregistrement, l'amplificateur de signal optique est pourvu d'un gain préassigné, et l'atténuateur optique variable est pourvu d'une atténuation préassignée ; et

   l'étape (S104) d'établissement de la relation de correspondance entre l'ID d'ONU et le facteur de contrôle de puissance des signaux optiques montants comprend :

   le démarrage (S32), quand l'ONU reçoit le signal d'enregistrement descendant et détermine qu'une exigence de puissance de l'intervalle de temps d'enregistrement est respectée, de l'enregistrement et de l'établissement d'une relation de correspondance entre l'ID d'ONU, le gain de l'amplificateur de signal optique et l'atténuation de l'atténuateur optique variable.

8. Procédé selon la revendication 2 dans lequel, quand le facteur de contrôle de puissance est un gain de l'amplificateur de signal optique et une atténuation de l'atténuateur optique variable, le signal d'enregistrement descendant comprend une information de gain réel de l'amplificateur de signal optique ;

   avant l'étape (S104) d'établissement de la relation de correspondance entre l'ID d'ONU et le facteur de contrôle de puissance des signaux optiques montants, le procédé comprend en outre :

   le réglage (S33) d'un gain réel de l'amplificateur de signal optique au minimum ;
   l'étape (S104) d'établissement de la relation de correspondance entre l'ID d'ONU et le facteur de contrôle de puissance des signaux optiques montants comprend : l'augmentation (S35), quand l'ONU reçoit le signal d'enregistrement descendant et détermine que le signal d'enregistrement descendant se trouve dans un intervalle de temps d'enregistrement avec un gain réel minimal de l'amplificateur de signal optique, du gain de l'amplificateur de signal optique jusqu'à ce qu'un numéro de série transmis par l'ONU soit correctement reçu ; et l'établissement (S36) d'une relation de correspondance entre l'ID d'ONU, le gain de l'amplificateur de signal optique et l'atténuation de l'atténuateur optique variable.

9. Procédé selon l'une quelconque des revendications 1 à 8, dans lequel
   une pluralité d'amplificateurs de signal optique ou d'atténuateurs optiques variables sont prévus.

10. Procédé selon la revendication 9, dans lequel,
   avant d'atteindre la pluralité d'amplificateurs de signal optique et/ou d'atténuateurs optiques variables, les signaux optiques montants sont soumis à un contrôle de puissance correspondant par le biais d'un amplificateur de signal optique partagé.

11. Procédé selon la revendication 10 dans lequel, quand une pluralité d'amplificateurs de signal optique ou d'atténuateurs optiques variables sont prévus, une pluralité de relations de correspondance sont prévues, chaque relation de la pluralité de relations de correspondance étant une relation entre chaque canal d'ID d'ONU et le facteur de contrôle de puissance des signaux optiques montants correspondants.

12. Dispositif de contrôle de puissance de signal optique, conçu pour mettre en œuvre le procédé selon l'une quelconque des revendications 1 à 11.

13. Terminal de ligne optique, OLT, comprenant : le dispositif selon la revendication 12.

14. Support de stockage stockant un programme informatique, le support de stockage étant installé dans un OLT selon la revendication 13, le programme informatique étant conçu pour être exécuté par un processeur de l'OLT pour mettre en œuvre les étapes de procédé des revendications 1 à 11.

15. Dispositif électronique, comprenant une mémoire et l'OLT selon la revendication 13, la mémoire stockant un programme informatique, et l'OLT étant conçu pour faire exécuter le programme informatique par un processeur pour mettre en œuvre les étapes de procédé des revendications 1 à 11.

Acquire different time points when uplink optical signals of optical network units (ONUs) arrive at an optical signal amplifier or a variable optical attenuator ⟋ S102

Establish a correspondence relationship between an ONU ID and a power control factor of the uplink optical signals ⟋ S104

Perform power control on the uplink optical signals according to the different time points and the correspondence relationship ⟋ S106

FIG.1

DBA-based output power control module

VOA ◄ SOA ◄ Uplink signal

FIG. 2

FIG. 3

FIG. 4

```
                    ( Start )

                         │
                         ▼
        ┌────────────────────────────────────┐         S502
        │ OLT assigns a minimum gain and      │
        │ allocates registration time slot to │◄──────┐
        │ SOA, and transmits a downlink       │       │
        │ registration signal including SOA   │       │
        │ gain information                    │       │
        └────────────────────────────────────┘       │
                         │                            │
                         ▼                       No   │
                    ╱─────────╲      S504              │
                   ╱ ONU receives ╲                   │
                  ╱ the downlink    ╲                 │
                 ╱ registration signal,╲──────────────┘
                 ╲ and determines whether╱
                  ╲ it is in the registration╱
                   ╲ time slot with the      ╱
                    ╲ minimum SOA gain       ╱
                     ╲─────────────────────╱
                         │ Yes
                         ▼                        S506
        ┌────────────────────────────────────┐
        │ ONU transmits an uplink serial number│
        └────────────────────────────────────┘
                         │
                         ▼                        S508
                    ╱─────────╲
           ┌──────╱ Does OLT receive╲──────────────┐
           │      ╲ ONU serial number╱              │
           │       ╲   correctly    ╱               │ Yes
           │        ╲──────────────╱                │
           │            │ No          S510          │
           │            ▼                           │
           │ ┌──────────────────────────────┐       │
           │ │ OLT increases the SOA gain    │       │
           └─│ and transmits a downlink      │       │
             │ registration signal, while ONU│       │
             │ continues to transmit a serial│       │
             │ number                        │       │
             └──────────────────────────────┘       │
                         │              S512         │
                         ▼                           │
        ┌────────────────────────────────────┐       │
        │ OLT receives the ONU serial number  │       │
        │ correctly, records the ONU ID and   │◄──────┘
        │ the SOA gain to establish a         │
        │ relationship between the ONU ID and │
        │ the SOA gain, and completes the     │
        │ registration                        │
        └────────────────────────────────────┘
                         │
                         ▼
                     ( End )
```

FIG. 5

FIG. 6

FIG.7

Start

S802

SOA has a fixed gain, OLT allocates the registration time slot in which the VOA has a pre-assigned attenuation and transmits a downlink registration signal

S804          No

Determine whether ONU meets power requirement of time slot

Yes

Start registration; OLT links the VOA attenuation with the ONU ID to establish a relationship between the ONU ID and the VOA attenuation          S806

Transmit data, and the uplink ONU optical signals are amplified to have powers that tend to be constant          S808

End

FIG.8

```
                          ┌─────────┐
                          │  Start  │
                          └────┬────┘
                               │                    ___ S902
         ┌─────────────────────┴──────────────────┐
         │ SOA has a fixed gain, OLT assigns a     │
         │ maximum attenuation and allocates the   │◄──────┐
         │ registration time slot to the VOA, and  │       │
         │ transmits a downlink registration signal│       │
         │ including VOA attenuation information    │       │
         └─────────────────────┬──────────────────┘       │
                               │              ___ S904     │
                          ╱────┴────╲                      │
                     ╱                   ╲    No           │
              ╱  ONU receives the downlink registration ╲──┘
              ╲  signal, and determines whether it is in ╱
                ╲  the registration time slot with the  ╱
                   ╲    minimum SOA gain    ╱
                          ╲────┬────╱
                               │  Yes       ___ S906
         ┌─────────────────────┴──────────────────┐
         │     ONU transmits an uplink serial number│
         └─────────────────────┬──────────────────┘
                               │              ___ S908
                          ╱────┴────╲
                     ╱                   ╲
         ┌────◄  Does OLT receive ONU serial number ╲────────┐
         │         ╲     correctly     ╱                     │
         │              ╲────┬────╱                          │
         │                   │  No      ___ S910    Yes      │
         │  ┌────────────────┴─────────────────┐             │
         │  │ OLT decreases the VOA attenuation │             │
         └──│ and transmits a downlink registration            │
            │ signal, while ONU continues to    │             │
            │ transmit a serial number          │             │
            └────────────────┬─────────────────┘             │
                             │            ___ S912            │
            ┌────────────────┴─────────────────┐             │
            │ OLT receives the ONU serial number│◄────────────┘
            │ correctly, records the ONU ID and  │
            │ the VOA attenuation to establish a │
            │ relationship between the ONU ID    │
            │ and the VOA attenuation, and       │
            │ completes the registration         │
            └────────────────┬─────────────────┘
                             │
                        ┌────┴────┐
                        │   End   │
                        └─────────┘
```

FIG.9

```
                    ( Start )                  ⌒ S1002

  ┌──────────────────────────────────────┐
  │ OLT allocates a registration time slot in │
  │ which SOA has a pre-assigned gain, and    │
  │ VOA has a pre-assigned attenuation and    │
  │ transmits a downlink registration signal  │
  └──────────────────────────────────────┘

                                    ⌒ S1004          No

             ⟨ Determines whether ONU meets
                power requirement of time slot ⟩

                        Yes

  ┌──────────────────────────────────────┐
  │ Start registration; OLT links the SOA gain, │  ⌒ S1006
  │ the VOA attenuation with the ONU ID to     │
  │ establish a relationship between the ONU   │
  │ ID and the SOA gain, the VOA attenuation   │
  └──────────────────────────────────────┘

  ┌──────────────────────────────────────┐
  │ Transmit data, and the uplink ONU optical │  ⌒ S1008
  │ signals are amplified to have powers that │
  │ tend to be constant                        │
  └──────────────────────────────────────┘

                    ( End )
```

FIG. 10

Start

OLT assigns a minimum actual gain and allocates the registration time slot to SOA, and transmits a downlink registration signal including SOA actual gain information

S1002

ONU receives the downlink registration signal, and determines whether it is in the registration time slot with the minimum SOA actual gain

S1004    No

Yes

ONU transmits an uplink serial number

S1006

Does OLT receive ONU serial number correctly

S1008

No    S1110    Yes

OLT increases the SOA actual gain and transmits a downlink registration signal, while ONU continues to transmit a serial number

OLT receives the ONU serial number correctly, records the ONU ID, the SOA gain, and the VOA attenuation to establish a relationship between the ONU ID, the SOA gain, and the VOA attenuation, and completes the registration

S1112

End

FIG. 11

FIG. 12

FIG. 13

FIG. 14

FIG. 15

FIG. 16

FIG. 17

Acquisition module 182

Establishment module 184

Control module 186

FIG. 18

First allocation unit 192

First establishment unit 194

Establishment module 184

FIG. 19

Second allocation unit 202

First increment unit 204

Second establishment unit 206

Establishment module 184

FIG. 20

Third allocation unit 212

Third establishment unit 214

Establishment module 184

FIG. 21

First setting unit 222

Fourth allocation unit 224

Decrement unit 226

Fourth establishment unit 228

Establishment module 184

FIG. 22

Fifth allocation unit 232

Fifth establishment unit 234

Establishment module 184

FIG. 23

Second setting unit 242

Sixth allocation unit 244

Second increment unit 246

Fourth establishment unit 248

Establishment module 184

FIG.24

**EP 3 598 667 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009208227 A1
- CN 101350670 A